# EUROPEAN PATENT APPLICATION

(11) **EP 4 841 390 A1**
(43) Date of publication of application: **18.11.2026**
(21) Application number: 26708235.2
(22) Date of filing: 25.02.2026
(51) Int. Cl.: G06F 1/16, H01Q 1/24, H04M 1/02, H04B 1/3827

(54) **CONDUCTIVE ADHESIVE MEMBER AND ELECTRONIC DEVICE COMPRISING SAME**

(30) Priority: 11.03.2025 KR 20250031617; 14.05.2025 KR 20250062515
(71) Applicant: Samsung Electronics Co., Ltd, Suwon-si, Gyeonggi-do 16677 (KR)
(72) Inventor: LEE, Sangha, Suwon-si Gyeonggi-do 16677 (KR); KANG, Woosuk, Suwon-si Gyeonggi-do 16677 (KR); KWON, Ohheon, Suwon-si Gyeonggi-do 16677 (KR); KIM, Hosaeng, Suwon-si Gyeonggi-do 16677 (KR); PARK, Gyubok, Suwon-si Gyeonggi-do 16677 (KR)
(74) Representative: HGF
(86) International application number: PCT/KR2026/003110
(87) International publication number: WO 2026/192261

(57) **Abstract**

According to various embodiments, an electronic device may include a housing including a front cover, a back cover, and a lateral member including at least one non-conductive portion and at least one conductive portion, a first support member disposed between the front cover and back cover, a conductive adhesive member disposed between the first support member and the back cover, and a wireless communication circuit disposed in the space and configured to transmit and/or receive a wireless signal in at least one frequency band through the at least one conductive portion, wherein the conductive adhesive member may include a first adhesive portion disposed to correspond to the at least one non-conductive portion and spaced apart from the at least one non-conductive portion by a first distance, and a second adhesive portion that is in contact with the at least one conductive portion or or disposed to correspond to the at least one conductive portion and spaced apart from the at least one conductive portion by a second distance shorter than the first distance.

## Description

### [Technical Field]

Various embodiments disclosed herein relate to a conductive adhesive member and an electronic device including the same.

### [Background Art]

As the functional gap between electronic devices from each manufacturer has decreased, the electronic devices are gradually becoming slimmer in order to meet consumers' purchasing needs, and development is being conducted to increase the rigidity of the electronic devices, strengthen design aspects of the electronic devices, and differentiate the functional elements of the electronic devices. As part of this trend, an electronic device may include, among its components, at least one antenna that is to be equipped for communication. Such an antenna may be implemented through a metal bezel (e.g., a lateral member) used as a portion of a housing of the electronic device, and is being developed to improve radiation performance of the antenna.

The above-described information may be provided as related art for the purpose of assisting in understanding the disclosure. No assertion or decision is made as to whether any of the above might be applicable as prior art with regard to the disclosure.

### [Disclosure of Invention]

### [Technical Problem]

An electronic device may include at least one housing (e.g., a housing structure) that includes a space configured to accommodate electronic components. The housing may include a front cover, a back cover facing the front cover, a lateral member disposed to surround a space between the front cover and the back cover, and a first support member extending from the lateral member into the space. The lateral member may be formed of a metal (e.g., a conductive layer, a conductive portion, or a conductive material) and a polymer (e.g., a non-conductive layer, a non-conductive portion, or a non-conductive material) so as to reinforce rigidity of the electronic device and/or perform a specific function (e.g., an antenna function). For example, the lateral member may include at least one non-conductive portion (e.g., a split portion) and at least one conductive portion, and the at least one non-conductive portion may be disposed between adjacent regions of the at least one conductive portion. The at least one conductive portion may operate as at least one antenna that operates in at least one frequency band by being electrically connected to a wireless communication circuit of the electronic device.

Meanwhile, the first support member and the back cover may be coupled through an adhesive member, and such a coupling structure may provide a waterproof space for protecting electronic components disposed in the inner space of the electronic device from external moisture and/or foreign substances. The adhesive member may include a conductive adhesive (e.g., an ionic adhesive) disposed on a substrate layer (e.g., a base layer) so as to comply with European Union (EU) repair regulations prohibiting the use of heat and to improve electrostatic discharge (ESD). In such a conductive adhesive member, the adhesive force may be weakened and induce easy separation between adhered objects due to the alignment of ions of the ionic adhesive according to polarity in response to voltage supply.

For maintenance of the electronic device, the back cover needs to be separated from the first support member. In such a case, the back cover may be easily separated from the first support member by supplying voltage to the conductive adhesive member and weakening the adhesive force.

However, the conductive adhesive member generally disposed along an edge of the electronic device may reduce radiation efficiency by being disposed close to a conductive portion of the lateral member used as an antenna.

To solve such a problem, the conductive adhesive member may have a segmented structure in which portions corresponding to a non-conductive portion of the lateral member and/or a feeding part of the antenna are segmented.

However, such a segmented structure may reduce waterproof performance because when the conductive adhesive is used as a waterproof member, waterproof performance may be reduced. Furthermore, since it is necessary to dispose a voltage supply portion (e.g., a positive electrode connecting part and a negative electrode connecting part) for each of multiple segmented conductive adhesive portions to supply voltage, there may be difficulties in arrangement efficiency and voltage supply procedures for maintenance.

Various embodiments of the disclosure may provide a conductive adhesive member and an electronic device including the same that may help improve radiation performance of an antenna.

Various embodiments of the disclosure may provide a conductive adhesive member and an electronic device including the same that may help improve waterproof performance.

Various embodiments of the disclosure may provide a conductive adhesive member and an electronic device including the same that may help improve ESD through the conductive adhesive member.

Various embodiments of the disclosure may provide a conductive adhesive member and an electronic device including the same that may help facilitate efficient maintenance by minimizing the number of voltage supply parts.

However, the problems to be solved by the disclosure are not limited to those mentioned above, and the scope of the disclosure may be variously expanded without departing from the spirit and essential features of the disclosure.

### [Solution to Problem]

According to various embodiments, an electronic device may include a housing including a front cover, a back cover facing a direction opposite to the front cover, and a lateral member surrounding a space between the front cover and the back cover, the lateral member including at least one non-conductive portion and at least one conductive portion, a first support member extending from the lateral member into the space, a loop-shaped conductive adhesive member disposed between the first support member and the back cover, and a wireless communication circuit disposed in the space and configured to transmit and/or receive a wireless signal in at least one frequency band through the at least one conductive portion. The conductive adhesive member may include a first adhesive portion spaced apart from the at least one non-conductive portion by a first distance, and a second adhesive portion that is in contact with the at least one conductive portion or spaced apart from the at least one conductive portion by a second distance smaller than the first distance.

According to various embodiments, an electronic device may include a housing including a front cover, a back cover facing a direction opposite to the front cover, and a lateral member surrounding a space between the front cover and the back cover, the lateral member including at least one non-conductive portion and at least one conductive portion, a first support member extending from the lateral member into the space, a conductive adhesive member having at least a partially segmented shape and disposed between the first support member and the back cover, a non-conductive adhesive member disposed at a segmented adhesive portion of the conductive adhesive member between the first support member and the back cover, and a wireless communication circuit disposed in the space and configured to transmit and/or receive a wireless signal in at least one frequency band through the at least one conductive portion. At least a portion of the conductive adhesive member may be connected to the non-conductive adhesive member to form a loop shape, and the conductive adhesive member may include a first adhesive portion spaced apart from the at least one non-conductive portion by a first distance, and a second adhesive portion that is in contact with the at least one conductive portion or spaced apart from the at least one conductive portion by a second distance smaller than the first distance.

According to various embodiments, an electronic device may include a housing comprising a front cover, a back cover facing an opposite direction to the front cover, and a lateral member surrounding a space between the front cover and the back cover, the lateral member comprising at least one non-conductive portion and at least one conductive portion, a first support member disposed between the front cover and back cover, a conductive adhesive member disposed between the first support member and the back cover to at least partially surround the space, and a wireless communication circuit disposed in the space and configured to transmit and/or receive a wireless signal in at least one frequency band through the at least one conductive portion. The conductive adhesive member may include a first adhesive portion disposed to correspond to the at least one non-conductive portion and spaced apart from the at least one non-conductive portion by a first distance, and a second adhesive portion in contact with the at least one conductive portion or disposed to correspond to the at least one conductive portion and spaced apart from the at least one conductive portion by a second distance shorter than the first distance.

### [Advantageous Effects of Invention]

An electronic device according to exemplary embodiments of the disclosure may include a loop-shaped conductive adhesive member. The conductive adhesive member may help improve antenna radiation performance by being disposed to be spaced apart from a non-conductive portion of a lateral member and/or a feeding part of an antenna, may help improve waterproof performance of electronic components disposed inside the electronic device by being formed in a loop shape, may be separated from a first support member by being supplied with voltage through a voltage supply part, and may guide static electricity introduced into the electronic device to ground through a voltage supply part used as ground.

An electronic device according to exemplary embodiments of the disclosure may include a conductive adhesive member including segmented adhesive portions and a non-conductive adhesive member disposed at the segmented adhesive portions of the conductive adhesive member. The conductive adhesive member may help improve antenna radiation performance by being disposed to be spaced apart from a non-conductive portion of a lateral member and/or a feeding part of an antenna, may help improve waterproof performance of electronic components disposed inside the electronic device by being connected to the non-conductive adhesive member and formed in a loop shape, may be separated from a first support member by being supplied with voltage through a voltage supply part, and may guide static electricity introduced into the electronic device to ground through a voltage supply part used as ground.

Various other effects understood directly or indirectly through the disclosure may be provided.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

With regard to the description of the drawings, the same or like reference signs may be used to designate the same or like elements.
FIG. 1 is a block diagram of an electronic device in a network environment according to various embodiments of the disclosure.
FIG. 2A is a front perspective view of an electronic device according to various embodiments of the disclosure.
FIG. 2B is a rear perspective view illustrating the electronic device of FIG. 2A according to various embodiments of the disclosure.
FIG. 3 is an exploded perspective view of the electronic device of FIG. 2A according to various embodiments of the disclosure.
FIG. 4A is an exploded enlarged view of an electronic device according to various embodiments of the disclosure.
FIG. 4B is a view illustrating a conductive adhesive member being separated from a lateral member by a voltage supply according to various embodiments of the disclosure.
FIG. 4C is a view illustrating a portion of a configuration of a conductive adhesive member according to various embodiments of the disclosure.
FIG. 4D is a view illustrating a portion of a configuration of a conductive layer according to various embodiments of the disclosure.
FIG. 5 is a view illustrating a portion of a configuration of an electronic device including a conductive adhesive member according to various embodiments of the disclosure.
FIG. 6A is a view illustrating a portion of a configuration of a conductive adhesive member spaced apart from a non-conductive portion of a lateral member and a feeding part of a wireless communication circuit according to various embodiments of the disclosure.
FIG. 6B is an enlarged view of an adhesive portion of FIG. 6A according to various embodiments of the disclosure.
FIG. 7 is a graph comparatively showing first antenna radiation performance of a non-conductive adhesive member, a conductive adhesive member, a conductive adhesive member spaced apart from a non-conductive portion of a lateral member, and a conductive adhesive member spaced apart from a non-conductive portion of the lateral member and a feeding part of a wireless communication circuit, according to various embodiments of the disclosure.
FIG. 8 is a graph comparatively showing second antenna radiation performance of a non-conductive adhesive member, a conductive adhesive member, a conductive adhesive member spaced apart from a non-conductive portion of a lateral member, and a conductive adhesive member spaced apart from a non-conductive portion of the lateral member and a feeding part of a wireless communication circuit, according to various embodiments of the disclosure.
FIG. 9 is a graph comparatively showing third antenna radiation performance of a non-conductive adhesive member, a conductive adhesive member, a conductive adhesive member spaced apart from a non-conductive portion of a lateral member, and a conductive adhesive member spaced apart from a non-conductive portion of the lateral member and a feeding part of a wireless communication circuit, according to various embodiments of the disclosure.
FIG. 10 is a view illustrating a portion of a configuration of a conductive adhesive member and a non-conductive adhesive member spaced apart from a non-conductive portion of a lateral member and a feeding part of a wireless communication circuit, according to various embodiments of the disclosure.
FIG. 11 is an exploded perspective view of the electronic device according to various embodiments of the disclosure.
FIGS. 12A to 12E are views each illustrating a configuration of a conductive layer according to various embodiments of the disclosure.
FIGS. 13A and 13B are views each illustrating a back cover attached to a first support member by a conductive adhesive member and a conductive layer according to various embodiments of the disclosure.
FIG. 14 is a view illustrating a portion of a configuration of a conductive adhesive member according to various embodiments of the disclosure.

### [Mode for the Invention]

Hereinafter, embodiments of the disclosure will be described in detail with reference to the accompanying drawings so that those skilled in the art to which the disclosure pertains can easily implement the disclosure. However, the disclosure may be implemented in various different forms and is not limited to embodiments set forth herein. With regard to the description of the drawings, the same or like reference signs may be used to designate the same or like elements. Also, in the drawings and the relevant descriptions, description of well-known functions and configurations may be omitted for the sake of clarity and brevity.

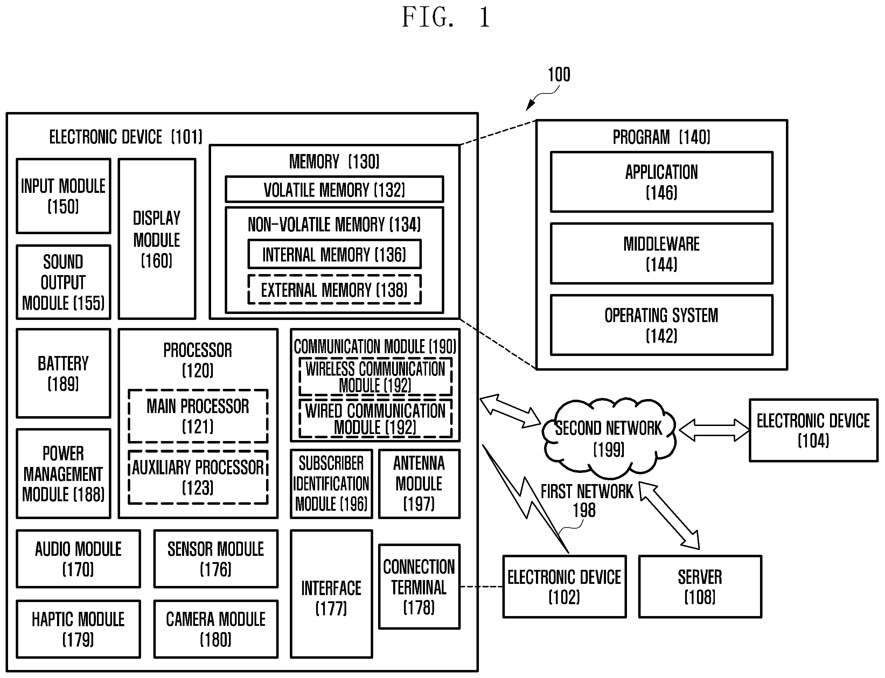

FIG. 1 is a block diagram of an electronic device in a network environment according to various embodiments of the disclosure.

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

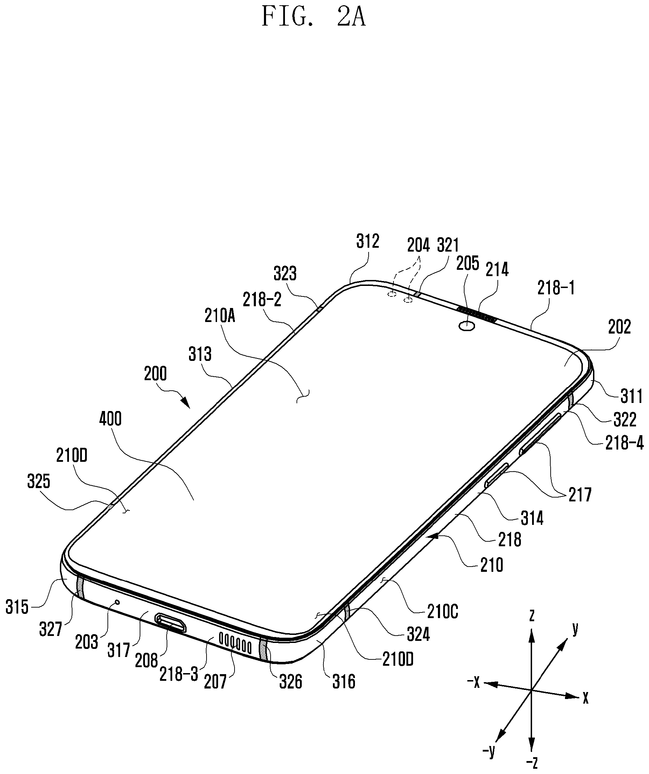

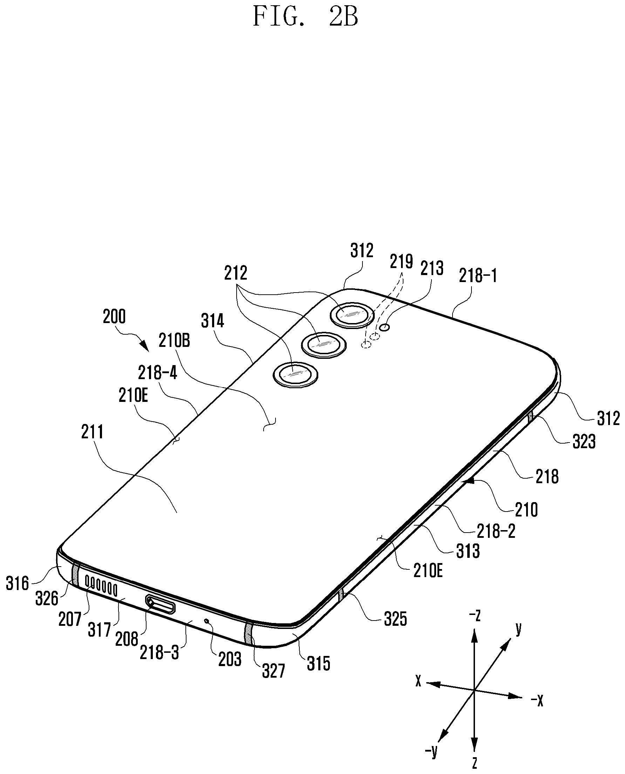

FIG. 2A is a front perspective view of an electronic device according to various embodiments. FIG. 2B is a rear perspective view of the electronic device of FIG. 2A according to various embodiments.

The electronic device 200 of FIGS. 2A and 2B may be at least partially similar to the electronic device 101 of FIG. 1, or may include other embodiments of the electronic device.

Referring to FIGS. 2A and 2B, the electronic device 200 according to an embodiment may include a housing 210 having a first surface (or a front surface) 210A, a second surface (or a rear surface) 210B, and a side surface 210C surrounding the space between the first surface 210A and the second surface 210B. In another embodiment (not illustrated), the term "housing 210" may refer to a structure forming some of the first surface 210A, the second surface 210B, and the side surface 210C. According to an embodiment, at least a portion of the first surface 210A may be formed by a substantially transparent front cover 202 (e.g., a glass plate or a polymer plate with various coating layers). The second surface 210B may be formed of a substantially opaque back cover 211. The back cover 211 may be made of, for example, coated or colored glass, ceramic, polymer, metal (e.g., aluminum, stainless steel (STS), or magnesium), or a combination of two or more of these materials. The side surface 210C may be formed by a lateral member (or a "side surface bezel structure") 218 coupled to the front cover 202 and the back cover 211 and including metal and/or polymer. In an embodiment, the back cover 211 and the lateral member 218 may be integrated with each other and may include the same material (e.g., a metal material such as aluminum).

In an embodiment, the front cover 202 may include, at the opposite long edges thereof, first areas 210D, which are bent from the first surface 210A toward the rear surface plate and extend seamlessly. In an embodiment, the back cover 211 may include, at the opposite long edges thereof, second areas 210E, which are bent from the second surface 210B toward the front surface plate and extend seamlessly. In some embodiments, the front cover 202 or the back cover 211 may include only one of the first areas 210D or the second areas 210E. In some embodiments, the front cover 202 and the back cover 211 may not include the first areas and the second areas, and may include only a flat surface arranged in parallel to the second surface 210B. In the above-described embodiments, when viewed from a side of the electronic device, the lateral member 218 may have a first thickness (or width) on the side surfaces where the first areas 210D or the second areas 210E are not included, and may have a second thickness smaller than the first thickness, on the side surfaces where the first areas or the second areas are included.

According to an embodiment, the electronic device 200 may include at least one of a display 201, an input device 203, sound output devices 207 and 214, sensor modules 204 and 219, camera modules 205, 212, and 213, key input devices 217, an indicator (not illustrated), or a connector 208. In some embodiments, at least one of the components (e.g., the key input devices 217 or the indicator) may be omitted from the electronic device 200 or other components may be additionally included.

The display 201 may be exposed through a substantial portion of, for example, the front cover 202. In some embodiments, the display 201 may be at least partially exposed through the front cover 202, which defines the first surface 210A and the first areas 210D of the side surface 210C. The display 201 may be coupled to or disposed adjacent to a touch detection circuit, a pressure sensor configured to measure a touch intensity (pressure), and/or a digitizer configured to detect a magnetic field-type stylus pen. In some embodiments, at least some of the sensor modules 204 and 219 and/or at least some of the key input devices 217 may be disposed in the first areas 210D and/or the second areas 210E.

The input device 203 may include a microphone. In some embodiments, the input device 203 may include a plurality of microphones arranged to detect the direction of sound. The sound output devices 207 and 214 may include speakers. The speakers may include an external speaker 207 and a call receiver 214. In some embodiments, the microphone, the speakers, and the connector 208 may be arranged in the space of the electronic device 200 and may be exposed to the external environment through at least one hole formed in the housing 210. In some embodiments, a hole formed in the housing 210 may be used jointly for the microphone and speakers. In some embodiments, the sound output devices 207 and 214 may include a speaker that operates without a hole in the housing 210 (e.g., a piezo speaker). In some embodiments, the electronic device 200 may further include a tray member disposed through at least a portion of the lateral member 218.

The sensor modules 204 and 219 may generate electrical signals or data values corresponding to an internal operating state or an external environmental state of the electronic device 200. The sensor modules 204 and 219 may include, for example, a first sensor module 204 (e.g., a proximity sensor), a second sensor module (not illustrated) (e.g., a fingerprint sensor) placed on the first surface 210A of the housing 210, and/or a third sensor module 219 (e.g., an HRM sensor) placed on the second surface 210B of the housing 210. The fingerprint sensor may be placed on the first surface 210A of the housing 210. The fingerprint sensor (e.g., an ultrasonic fingerprint sensor or an optical fingerprint sensor) may be disposed under the display 201 of the first surface 210A. The electronic device 200 may further include at least one of sensor modules (not illustrated), such as a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor 204.

The camera modules 205, 212, and 213 may include a first camera device 205 disposed on the first surface 210A of the electronic device 200, and a second camera device 212 and/or a flash 213 disposed on the second surface 210B. The camera modules 205 and 212 may include one or more lenses, an image sensor, and/or an image signal processor. The flash 213 may include, for example, a light-emitting diode or a xenon lamp. In some embodiments, two or more lenses (e.g., a wide-angle lens and a telephoto lens) and image sensors may be disposed on one surface of the electronic device 200.

The key input devices 217 may be disposed on the side surface 210C of the housing 210. In another embodiment, the electronic device 200 may not include some or all of the above-described key input devices 217, and a key input device 217 not included may be implemented in another form, such as a soft key on the display 201. In another embodiment, the key input devices 217 may be implemented using pressure sensors included in the display 201.

The indicator may be disposed, for example, on the first surface 210A of the housing 210. The indicator may provide, for example, the state information of the electronic device 200 in an optical form. In another embodiment, the light-emitting element may provide, for example, a light source that operates in conjunction with the operation of the camera module 205. The indicator may include, for example, an LED, an IR LED, and a xenon lamp.

The connector holes 208 may include a first connector hole 208 capable of accommodating a connector (e.g., a USB connector or an interface connector port (IF) module) configured to transmit/receive power and/or data to/from an external electronic device, and/or a second connector hole (or an earphone jack) capable of accommodating a connector configured to transmit/receive an audio signal to/from an external electronic device.

Some camera modules 205 among the camera modules 205 and 212, some sensor modules 204 among the sensor modules 204 and 219, or the indicator may be disposed to be exposed through the display 201. For example, the camera modules 205, the sensor modules 204, or the indicator may be disposed in the inner space of the electronic device 200 to be in contact with the external environment through an opening perforated in the display 201 up to the front cover 202 or a transmission area. In an embodiment, the area where the display 201 and the camera modules 205 face each other may be configured as a transmission area with a predetermined transmittance as a portion of a content display area. In an embodiment, the transmission area may have a transmittance ranging from about 5% to about 20%. The transmission area may include an area overlapping with an effective area (e.g., a field of view area) of the camera module 205 through which light passes to form an image on the image sensor. For example, the transmission area of the display 201 may include an area having a lower pixel density than the periphery. For example, the transmission area may replace the opening. For example, the camera module 205 may include an under-display camera (UDC). As another embodiment, some sensor modules 204 may be disposed in the inner space of the electronic device to perform the functions thereof without being visually exposed through the front cover 202. For example, in this case, the area of the display 201 facing the sensor module may not require a perforated opening.

According to various embodiments, the lateral member 218 may include a first side surface 218-1 having a first length, a second side surface 218-2 extending from one end of the first side surface 218-1 in a direction perpendicular to the first side surface 218-1 (e.g., the -y axis direction) to have a second length, a third side surface 218-3 extending from the second side surface 218-2 substantially parallel to the first side surface 218-1 and having the first length, and a fourth side surface 218-4 extending from the third side surface 218-3 substantially parallel to the second side surface 218-2, having the second length, and extending to the other end of the first side surface 218-1.

According to various embodiments, the electronic device 200 may include non-conductive portions 321, 322, 323, 324, 325, 326, and 327 (e.g., segmentation portions or gaps) and conductive portions 311, 312, 313, 314, 315, 316, and 317 disposed on at least a portion of the lateral member 218. In an embodiment, the non-conductive portion may be disposed between the conductive portions. For example, the non-conductive portions 321, 322, 323, 324, 325, 326, and 327 may be disposed between the conductive portions 311, 312, 313, 314, 315, 316, and 317 along directions parallel to the first surface 210A (e.g. parallel to the x-y plane in FIGs. 2A and 2B). In an embodiment, during a manufacturing process of the lateral member 218 and/or electronic device 200, the conductive portions 311, 312, 313, 314, 315, 316, and 317 may first be formed, and subsequently the non-conductive portions 321, 322, 323, 324, 325, 326, and 327 may be formed (e.g. through an insert molding process) in spaces between the conductive portions 311, 312, 313, 314, 315, 316, and 317. In an embodiment, when the electronic device is viewed from above (e.g., when viewed in a z-axis direction), the lateral member 218 may appear to be segmented into the conductive portions 311, 312, 313, 314, 315, 316, and 317 by the non-conductive portions 321, 322, 323, 324, 325, 326, and 327.

According to various embodiments, the conductive portions 311, 312, 313, 314, 315, 316, and 317 may include a first conductive portion 311 disposed between a first non-conductive portion 321 and a second non-conductive portion 322 spaced apart from each other, a second conductive portion 312 disposed between the first non-conductive portion 321 and a third non-conductive portion 323 spaced apart from each other, a third conductive portion 313 disposed between the third non-conductive portion 323 and a fifth non-conductive portion 325 spaced apart from each other, a fourth conductive portion 314 disposed between a fourth non-conductive portion 324 and the second non-conductive portion 322 spaced apart from each other, a fifth conductive portion 315 disposed between the fifth non-conductive portion 325 and a seventh non-conductive portion 327 spaced apart from each other, a sixth conductive portion 316 disposed between a sixth non-conductive portion 326 and the fourth non-conductive portion 324 spaced apart from each other, and/or a seventh conductive portion 317 disposed between the seventh non-conductive portion 327 and the sixth non-conductive portion 326 spaced apart from each other. In an embodiment, the first conductive portion 311 may be disposed to extend from a portion of the first side surface 218-1 to a portion of the fourth side surface 218-4 through the first non-conductive portion 321 disposed on the first side surface 218-1 and the second non-conductive portion 322 disposed on the fourth side surface 218-4. The second conductive portion 312 may be disposed to extend from a portion of the first side surface 218-1 to a portion of the second side surface 218-2 through the first non-conductive portion 321 disposed on the first side surface 218-1 and the third non-conductive portion 323 disposed on the second side surface 218-2. The third conductive portion 313 may be disposed on a portion of the second side surface 218-2 through the third non-conductive portion 323 and the fifth non-conductive portion 325 disposed on the second side surface 218-2. The fourth conductive portion 314 may be disposed on a portion of the fourth side surface 218-4 through the second non-conductive portion 322 and the fourth non-conductive portion 324 disposed on the fourth side surface 218-4. The fifth conductive portion 315 may be disposed to extend from a portion of the second side surface 218-2 to a portion of the third side surface 218-3 through the third non-conductive portion 323 disposed on the second side surface 218-2 and the seventh non-conductive portion 327 disposed on the third side surface 218-3. The sixth conductive portion 316 may be disposed to extend from a portion of the third side surface 218-3 to a portion of the fourth side surface 218-4 through the sixth non-conductive portion 326 disposed on the third side surface 218-3 and the fourth non-conductive portion 324 disposed on the fourth side surface 218-4. The seventh conductive portion 317 may be disposed on a portion of the third side surface 218-3 through the sixth non-conductive portion 326 and the seventh non-conductive portion 327 disposed on the third side surface 218-3. In an embodiment, the first to seventh conductive portions 311, 312, 313, 314, 315, 316, and 317 may operate as antennas selectively or simultaneously in multiple frequency bands through multiple conductive lines (e.g., feeding lines) electrically connected to a wireless communication circuit (e.g., the wireless communication module 192 of FIG. 1). Although seven conductive portions 311, 312, 313, 314, 315, 316, and 317 and seven non-conductive portions 321, 322, 323, 324, 325, 326, and 327 are illustrated in FIGs. 2A and 2B, it will be appreciated that the disclosure is not limited thereto, and that other numbers and arrangements of conductive portions and non-conductive portions may be used.

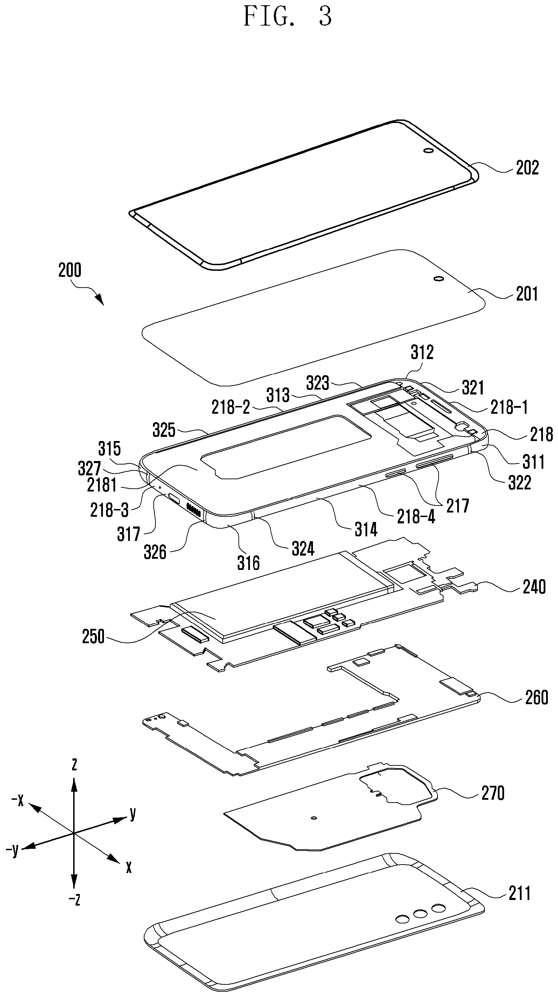

FIG. 3 is an exploded perspective view of the electronic device of FIG. 2A according to various embodiments.

Referring to FIG. 3, the electronic device 200 may include a lateral member 218, a first support member 2181 (e.g., a bracket or a front housing), a front cover 202 (e.g., a front surface plate), a display 201, a printed circuit board 240, a battery 250, a second support member 260 (e.g., a rear housing), an antenna 270, and a back cover 211 (e.g., a rear surface plate). In some embodiments, at least one of the components (e.g., the first support member 2181 or the second support member 260) may be omitted from the electronic device 200 or other components may be additionally included. At least one component of the electronic device 200 may be the same as or similar to at least one component of the electronic device 200 of FIG. 2A or FIG. 2B, and a redundant description will be omitted below.

According to various embodiments, the first support member 2181 may be disposed inside the electronic device 200. For example, the first support member 2181 may be disposed between the front cover 202 and the back cover 211. For example, the first support member 2181 may be structurally coupled with the lateral member 218, or may be integrally formed with the lateral member 218. The first support member 2181 may be formed of, for example, a metal material and/or a non-metal (e.g., polymer) material. The first support member 2181 may include one surface to which the display 201 is coupled and the other surface to which the printed circuit board 240 is coupled. On the printed circuit board 240, a processor, a memory, and/or an interface may be mounted. The processor may include, for example, one or more of a central processing unit, an application processor, a graphics processing unit, an image signal processor, a sensor hub processor, or a communication processor. In an embodiment, the display 201 may be disposed to be supported by the first support member 2181.

The memory may include, for example, volatile memory or non-volatile memory.

The interface may include, for example, a high-definition multimedia interface (HDMI), a universal serial bus (USB) interface, an SD card interface, and/or an audio interface. The interface may electrically or physically connect, for example, the electronic device 200 to an external electronic device, and may include a USB connector, an SD card/a multi-media card (MMC) connector, or an audio connector.

The battery 250 may serve as a device that supplies power to at least one component of the electronic device 200, and may include, for example, a non-rechargeable primary cell, a rechargeable secondary cell, or a fuel cell. At least a portion of the battery 250 may be disposed on substantially the same plane as, for example, the printed circuit board 240. The lateral member 218 may include a first support member 2181 extending at least partially from a side surface (e.g., the side surface 210C of FIG. 2A) into the inner space of the electronic device 200. The battery 250 may be disposed between the first support member 2181 and the back cover 211. At least a portion of the printed circuit board 240 may be connected to the battery 250. In some embodiments, the battery 250 may be integrally disposed inside the electronic device 200. In some embodiments, the printed circuit board 240 may be disposed between the first support member 2181 and the front cover 202. In an embodiment, the battery 250 may also be detachably disposed on the electronic device 200.

The antenna 270 may be disposed between the back cover 211 and the battery 250. The antenna 270 may include, for example, a near-field communication (NFC) antenna, a wireless charging antenna, and/or a magnetic secure transmission (MST) antenna. For example, the antenna 270 may execute short-range communication with an external device or may transmit/receive power required for charging to/from an external device in a wireless manner. In another embodiment, an antenna structure may be configured with a portion or a combination of the lateral member 218 and/or the first support member 2181.

According to various embodiments, the lateral member 218 may include non-conductive portions 321, 322, 323, 324, 325, 326, and 327 and conductive portions (e.g., the conductive portions 311, 312, 313, 314, 315, 316, and 317 of FIGS. 2A and 2B). The conductive portions may form at least a portion of a side surface of the electronic device 200 and may be disposed to be visible from the outside. For example, at least one of the first, second, third, and fourth side surfaces 218-1, 218-2, 218-3, and 218-4 of the lateral member 218 may be configured to operate in a predetermined frequency band (e.g., a legacy band in a range of about 600 MHz to 6000 MHz) by being electrically connected through the conductive portions to a wireless communication circuit (e.g., the wireless communication module 192 of FIG. 1) disposed on a printed circuit board (e.g., the printed circuit board 240 of FIG. 3) of the electronic device 200.

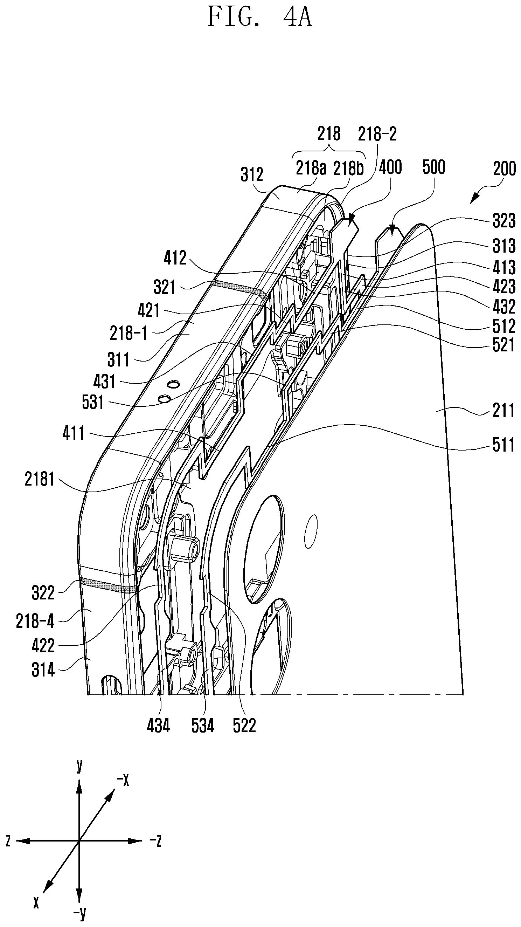

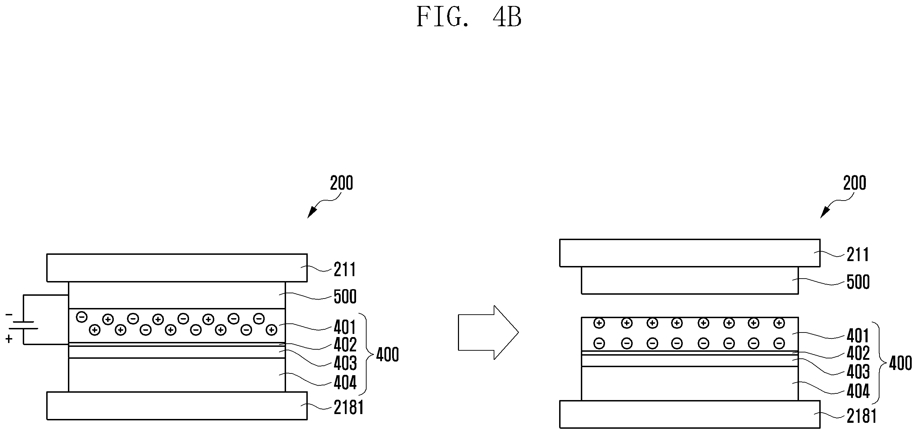

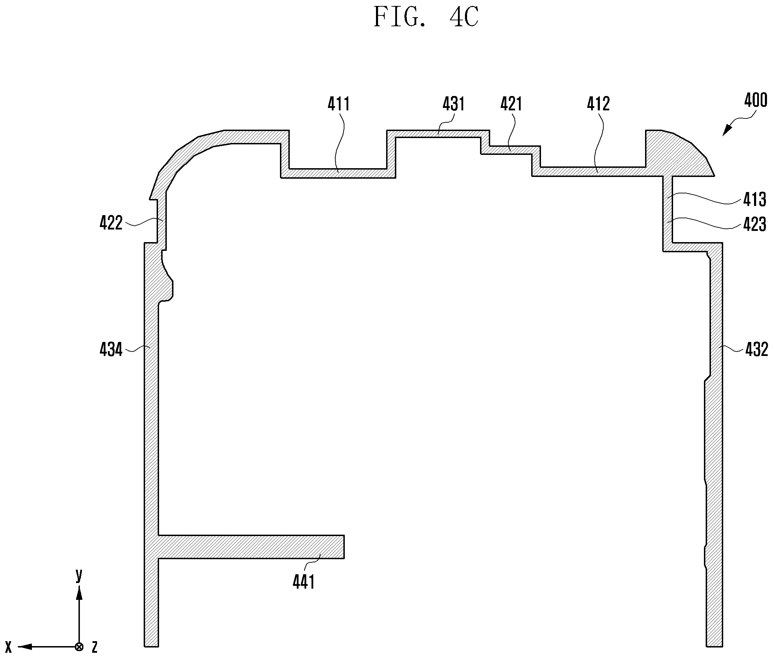

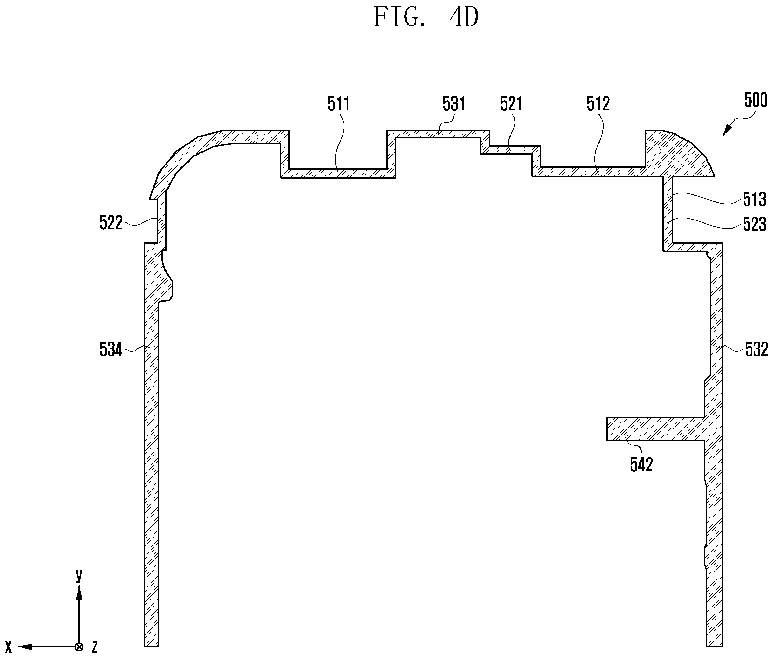

FIG. 4A is an exploded enlarged view of an electronic device according to various embodiments of the disclosure. FIG. 4B is a view illustrating a conductive adhesive member being separated from a lateral member by voltage supply, according to various embodiments of the disclosure. FIG. 4C is a view illustrating a portion of a configuration of a conductive adhesive member according to various embodiments of the disclosure. FIG. 4D is a view illustrating a portion of a configuration of a conductive layer according to various embodiments of the disclosure.

Referring to FIGS. 4A, 4B, 4C, and 4D, the electronic device 200 may include a lateral member 218, a first support member 2181, a conductive adhesive member 400, a conductive layer 500, and a back cover 211. The conductive adhesive member 400 may include a substrate layer 403, a voltage supply layer 402 (e.g., a voltage application layer) disposed on a first surface of the substrate layer 403, a first adhesive layer 401 laminated on the voltage supply layer 402, and a second adhesive layer 404 disposed on a second surface of the substrate layer 403 opposite to the first surface. In an embodiment, the substrate layer 403 may include a polymer sheet (e.g., PET or TPU material). In an embodiment, the voltage supply layer 402 may include a conductive layer (e.g., a metal sheet) electrically connected to a battery of the electronic device. In some embodiments, the voltage supply layer 402 may be replaced with (or include) a conductive paint applied to the substrate layer 403. In an embodiment, the first adhesive layer 401 may include a conductive adhesive (e.g., an ionic adhesive) containing ions of different polarities. In an embodiment, the first adhesive layer 401 may be attached to the conductive layer 500 disposed on the inner surface of the back cover 211 at a position corresponding to the conductive adhesive member 400. In an embodiment, the conductive layer 500 may include a metal sheet, a conductive adhesive, or a conductive paint, and may be disposed on the inner surface of the back cover 211. In some embodiments, when the back cover 211 is formed of a conductive material (e.g., metal), the conductive layer 500 may be omitted. In an embodiment, the second adhesive layer 404 may include a non-conductive adhesive layer (e.g., PSA) for being attached to the first support member 2181. At least one of the components of the electronic device 200 may be the same as or similar to at least one of the components of the electronic device 200 of FIG. 3, and a redundant description is omitted below.

According to various embodiments, the conductive adhesive member 400 and/or the conductive layer 500 may be disposed to at least partially surround a space between the front cover 202 and the back cover 211. For example, the conductive adhesive member 400 and/or the conductive layer 500 may be formed in a loop shape. By forming the conductive adhesive member 400 and/or the conductive layer 500 in a continuous closed-loop form, moisture flowing into a space between a lateral member (e.g., the lateral member 218 of FIG. 3) and a back cover (e.g., the back cover 211 of FIG. 3) may be blocked. For example, the first adhesive layer 401, the substrate layer 403, and the second adhesive layer 404 may be formed in corresponding shapes.

According to various embodiments, the conductive adhesive member 400 may include a (2-1)^{th} adhesive portion 431, a (2-2)^{th} adhesive portion 432 extending from one end of the (2-1)^{th} adhesive portion 431, a (2-3)^{th} adhesive portion (not illustrated) extending from the (2-2)^{th} adhesive portion 432 to be at least partially parallel to the (2-1)^{th} adhesive portion 431, and a (2-4)^{th} adhesive portion 434 extending from the (2-3)^{th} adhesive portion to be at least partially parallel to the (2-2)^{th} adhesive portion 432. The (2-1)^{th} adhesive portion 431, the (2-2)^{th} adhesive portion 432, the (2-3)^{th} adhesive portion, and the (2-4)^{th} adhesive portion 434 may be disposed to be at least partially aligned with edges of the lateral member (e.g., the lateral member 218 of FIG. 3) (e.g., the first side surface 218-1, the second side surface 218-2, the third side surface 218-3, and the fourth side surface 218-4 of FIG. 3). The conductive layer 500 may include a (5-1)^{th} adhesive portion 531, a (5-2)^{th} adhesive portion 532 extending from one end of the (5-1)^{th} adhesive portion 531, a (5-3)^{th} adhesive portion (not illustrated) extending from the (5-2)^{th} adhesive portion 532 to be at least partially parallel to the (5-1)^{th} adhesive portion 531, and a (5-4)^{th} adhesive portion 534 extending from the (5-3)^{th} adhesive portion to be at least partially parallel to the (5-2)^{th} adhesive portion 532. The (5-1)^{th} adhesive portion 531, the (5-2)^{th} adhesive portion 532, the (5-3)^{th} adhesive portion, and the (5-4)^{th} adhesive portion 534 may be disposed to be at least partially aligned with edges of the lateral member. The (2-1)^{th} adhesive portion 431 and the (5-1)^{th} adhesive portion 531 may be disposed to be at least partially aligned with the first side surface 218-1. The (2-2)^{th} adhesive portion 432 and the (5-2)^{th} adhesive portion 532 may be disposed to be at least partially aligned with the second side surface 218-2. The (2-3)^{th} adhesive portion and the (5-3)^{th} adhesive portion may be disposed to be at least partially aligned with the third side surface 218-3. The (2-4)^{th} adhesive portion 434 and the (5-4)^{th} adhesive portion 534 may be disposed to be at least partially aligned with the fourth side surface 218-4.

According to various embodiments, the conductive adhesive member 400 and the conductive layer 500 may be formed in corresponding shapes. A first adhesive portion of the conductive adhesive member 400 (e.g., the first segmentation-spaced adhesive portion 421, the second segmentation-spaced adhesive portion 422, and/or the third segmentation-spaced adhesive portion 423), a second adhesive portion (e.g., the (2-1)^{th} adhesive portion 431, the (2-2)^{th} adhesive portion 432, the (2-3)^{th} adhesive portion (not illustrated), and/or the (2-4)^{th} adhesive portion 434), and/or a third adhesive portion (e.g., the first feeding part-spaced adhesive portion 411, the second feeding part-spaced adhesive portion 412, and/or the third feeding part-spaced adhesive portion 413) may be formed respectively in corresponding shapes to a fourth adhesive portion of the conductive layer 500 (e.g., the fourth segmentation-spaced adhesive portion 521, the fifth segmentation-spaced adhesive portion 522, and/or the sixth segmentation-spaced adhesive portion 523), a fifth adhesive portion (e.g., the (5-1)^{th} adhesive portion 531, the (5-2)^{th} adhesive portion 532, the (5-3)^{th} adhesive portion (not illustrated), and/or the (5-4)^{th} adhesive portion 534), and/or a sixth adhesive portion (e.g., the fourth feeding part-spaced adhesive portion 511, the fifth feeding part-spaced adhesive portion 512, and/or the sixth feeding part-spaced adhesive portion 513). For example, the first feeding part-spaced adhesive portion 411 of the conductive adhesive member 400 may be formed in a shape corresponding to the fourth feeding part-spaced adhesive portion 511 of the conductive layer 500.

According to various embodiments, the conductive adhesive member 400 may be disposed between the first support member 2181 and the back cover 211. At least a portion of the conductive layer 500 may be disposed between the back cover 211 and the conductive adhesive member 400. The back cover 211 may be attached to the first support member 2181 through the conductive adhesive member 400. The conductive adhesive member 400 may be attached to the first support member 2181 through the second adhesive layer 404. The conductive layer 500 (which may be disposed on the back cover 211) may be attached to the first support member 2181 through an adhesive force of the first adhesive layer 401 of the conductive adhesive member 400. Accordingly, the back cover 211 may be attached to the first support member 2181 through the conductive adhesive member 400 (and the conductive layer 500). The first adhesive layer 401 may be disposed between the conductive layer 500 and the substrate layer 403 such that the conductive layer 500 and the substrate layer 403 are bonded. The substrate layer 403 may be disposed between the first adhesive layer 401 and the second adhesive layer 404 such that the first adhesive layer 401 and the second adhesive layer 404 are bonded. The second adhesive layer 404 may be disposed between the first support member 2181 and the substrate layer 403 such that the first support member 2181 and the substrate layer 403 are bonded. The first adhesive layer 401 may be formed of an ionic adhesive material in which cations and anions are arranged. The substrate layer 403 may be formed of an adhesive material on which a conductive substrate material is deposited. The second adhesive layer 404 may be formed of a non-conductive adhesive material.

According to various embodiments, the electronic device 200 may include a voltage supply part connected to at least a portion of the conductive adhesive member 400 and at least a portion of the conductive layer 500. The voltage supply part may be connected to at least a portion of a printed circuit board (e.g., the printed circuit board 240 of FIG. 3). In an embodiment, when separating the conductive adhesive member 400 from the conductive layer 500, power of a battery (e.g., the battery 250 of FIG. 3) may be delivered to the voltage supply part through a switching circuit, for example a switching circuit of the printed circuit board. In an embodiment, by separating the conductive adhesive member 400 from the conductive layer 500 through the switching circuit (e.g. the switching circuit of the printed circuit board), the first support member 2181 and the back cover 211 may be separated. In this case, an electronic component (e.g., the battery 250 of FIG. 3) disposed between the first support member 2181 and the back cover 211 may be repaired by an operator. In an embodiment, the voltage supply part may be disposed to extend from at least a portion of the conductive adhesive member 400 and at least a portion of the conductive layer 500 into an inner space of the electronic device 200. For example, the voltage supply part may include an extension (e.g., a positive electrode connecting part 441) extending into the inner space (of the shape or loop formed by the conductive adhesive member 400) from at least a portion of the voltage supply layer 402 of the conductive adhesive member 400, and an extension (e.g., a negative electrode connecting part 542) extending into the inner space (of the shape or loop formed by the conductive layer 500) from at least a portion of the conductive layer 500. In some embodiments, a positive electrode connecting part (not illustrated) may extend into the inner space from at least a portion of the conductive layer 500, and a negative electrode connecting part (not illustrated) may extend into the inner space from at least a portion of the voltage supply layer 402. In an embodiment, the voltage supply part may be electrically connected to at least a portion of the conductive adhesive member 400 and at least a portion of the conductive layer 500. In some embodiments, the voltage supply part may be directly connected to the battery. For example, the positive electrode connecting part 441 may be connected to the positive electrode of the battery, and the negative electrode connecting part 542 may be connected to the negative electrode of the battery.

According to various embodiments, a battery (e.g., the battery 250 of FIG. 3) may include a positive electrode and a negative electrode. In an embodiment, the positive electrode connecting part 441 of the voltage supply part may be electrically connected to the positive electrode of the battery through a switching circuit, for example a switching circuit of the printed circuit board (e.g., the printed circuit board 240 of FIG. 3). The negative electrode connecting part 542 of the voltage supply part may be electrically connected to the negative electrode of the battery or to ground (e.g., a reference potential of a wireless signal transmitted and/or received by a wireless communication circuit (e.g., the wireless communication circuit 192 of FIG. 1)). In an embodiment, the positive electrode connecting part 441 of the voltage supply part may be directly connected to the positive electrode of the battery. The negative electrode connecting part 542 of the voltage supply part may be connected to a negative electrode of a battery or to ground through a switching circuit, for example a switching circuit of a printed circuit board (e.g., the printed circuit board 240 of FIG. 3).

According to various embodiments, the positive electrode connecting part 441 of the voltage supply part may be connected to at least a portion of the conductive adhesive member 400 and connected to a positive electrode of a battery (e.g., the battery 250 of FIG. 3) through a switching circuit, for example a switching circuit of a printed circuit board (e.g., the printed circuit board 240 of FIG. 3). Through an electronic component (for example, the switching circuit) of the printed circuit board (e.g., the printed circuit board 240 of FIG. 3), power supplied from the battery (e.g., the battery 250 of FIG. 3) to the voltage supply part (e.g., the positive electrode connecting part 441 and the negative electrode connecting part 542) may be amplified. When power is supplied to the positive electrode connecting part 441, power may be supplied to the voltage supply layer 402 extending from the positive electrode connecting part 441. When power is supplied to the negative electrode connecting part 542, power may be supplied to the conductive layer 500 extending from the negative electrode connecting part 542. In an embodiment, when power is supplied to each of the voltage supply layer 402 and the conductive layer 500, a potential difference may occur between the voltage supply layer 402 and the conductive layer 500. In an embodiment, when a potential difference occurs between the voltage supply layer 402 and the conductive layer 500, cations and anions included in the first adhesive layer 401 may be rearranged such that ions of the same polarity gather together. As a result, the bonding force between the first adhesive layer 401 and the conductive layer 500 may be reduced, and the conductive adhesive member 400 may be separated from the conductive layer 500.

According to various embodiments, the negative electrode connecting part 542 of the voltage supply part may be connected to at least a portion of the conductive layer 500 and connected to a negative electrode of a battery (e.g., the battery 250 of FIG. 3) or to ground (e.g., a reference potential of a wireless signal transmitted and/or received by a wireless communication circuit (e.g., the wireless communication circuit 192 of FIG. 1)). The negative electrode connecting part may help improve electrostatic discharge (ESD) by guiding static electricity introduced into a space between a front cover (e.g., the front cover 202 of FIG. 3) and the back cover 211 to ground.

According to various embodiments, the lateral member 218 may be configured such that at least a portion of a side surface (e.g., the side surface 210C of FIG. 2A) of the electronic device 200 and at least a portion of the first support member 2181 (e.g., the conductive portions 311, 312, 313, 314, 315, 316, and 317 of FIGS. 2A and 2B) are formed of conductive material 218a (e.g., metal), and a remaining portion of the side surface of the electronic device 200 and a remaining portion of the first support member 2181 (e.g., the non-conductive portions 321, 322, 323, 324, 325, 326, and 327) are formed of a non-conductive material 218b (e.g., polymer). The lateral member 218 may be formed through a combination of conductive portions (e.g., the conductive portions 311, 312, 313, 314, 315, 316, and 317 of FIGS. 2A and 2B) and/or non-conductive portions (e.g. the non-conductive portions 321, 322, 323, 324, 325, 326, and 327).

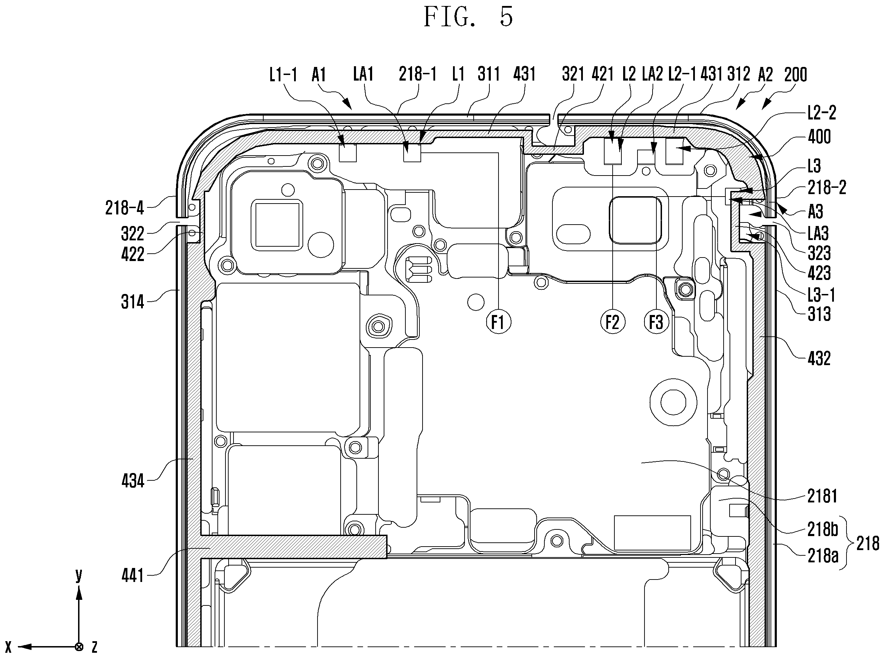

FIG. 5 is a view illustrating a portion of a configuration of an electronic device including a conductive adhesive member according to various embodiments of the disclosure. FIG. 5 is a view illustrating an internal structure of the electronic device with a back cover removed.

Referring to FIG. 5, the electronic device 200 may include a first antenna A1 operating through a first conductive portion 311, and/or a second antenna A2 and a third antenna A3 operating through a second conductive portion 312. For example, the first to third antennas A1, A2, and A3 may be configured as upper end antennas disposed on an upper side of the electronic device 200. In an embodiment, the first conductive portion 311 may have a first electrical length through the first non-conductive portion 321 and the second non-conductive portion 322. For example, the electrical length of the first conductive portion 311 may be the distance between the first non-conductive portion 321 and the second non-conductive portion 322. The second conductive portion 312 may have a second electrical length through the first non-conductive portion 321 and the third non-conductive portion 323. For example, the electrical length of the second conductive portion 312 may be the distance between the first non-conductive portion 321 and the third non-conductive portion 323. For example, the second electrical length may be the same as or shorter than the first electrical length. In an embodiment, the antennas A1, A2, and A3 may be operated in at least one frequency band among a low band of about 600 MHz to 960 MHz, a mid-band of about 1700 MHz to 2200 MHz, a high band of about 2300 MHz to 2800 MHz, a sub-6 band of about 5 GHz to 6 GHz, a UHB band of about 3.2 GHz to 4.5 GHz, BT (Bluetooth), a global positioning system (GPS), or wireless fidelity (WIFI).

According to various embodiments, the lateral member 218 may include at least one feeding part in which the first and second conductive portions 311 and 312 are electrically connected to first to third wireless communication circuits F1, F2, and F3. According to an unrestricted embodiment, the first to third wireless communication circuits F1, F2, and F3 may be distinguished as three wireless communication circuits, but may also be one or more wireless communication circuits. In an embodiment, the feeding part may include a first feeding part LA1, a second feeding part LA2, and/or a third feeding part LA3. For example, the first conductive portion 311 may be used as a first antenna A1 operating in a low band by being electrically connected, at a first point L1 or a (1-1)^{th} point L1-1, to the first feeding part LA1 and to the first wireless communication circuit F1 (e.g., the wireless communication module 192 of FIG. 1) disposed on a printed circuit board (e.g., the printed circuit board 240 of FIG. 3). The second conductive portion 312 may be used as a second antenna A2 operating in a mid-band by being electrically connected, at a second point L2, a (2-1)^{th} point L2-1, or a (2-2)^{th} point L2-2, to the second feeding part LA2 and to the second wireless communication circuit F2 (e.g., the wireless communication module 192 of FIG. 1) disposed on the printed circuit board. The second conductive portion 312 may be used as a third antenna A3 operating in a high band and/or a UHB band by being electrically connected, at a third point L3 or a (3-1)^{th} point L3-1, to the third feeding part LA3 and to the third wireless communication circuit F3 (e.g., the wireless communication module 192 of FIG. 1) disposed on the printed circuit board.

According to various embodiments, the electronic device 200 may include a voltage supply part (e.g., a positive electrode connecting part 441 and a negative electrode connecting part 542 of FIG. 4D) connected to at least a portion of the conductive adhesive member 400 and at least a portion of a conductive layer (e.g., the conductive layer 500 of FIG. 4A). In an embodiment, the positive electrode connecting part 441 may be connected to at least a portion of the printed circuit board (e.g., the printed circuit board 240 of FIG. 3). The positive electrode connecting part 441 may be electrically connected to a positive electrode of a battery (e.g., the battery 250 of FIG. 3) through a switching circuit, for example a switching circuit of the printed circuit board. The positive electrode connecting part 441 may be connected to at least a portion of the conductive adhesive member 400 and connected to the positive electrode of the battery through the switching circuit, for example the switching circuit of the printed circuit board. In an embodiment, the negative electrode connecting part may be connected to at least a portion of the conductive layer 500 and connected to the negative electrode of the battery or to ground (e.g., a reference potential of a wireless signal transmitted and/or received by a wireless communication circuit (e.g., the wireless communication circuit 192 of FIG. 1)). In an embodiment, when power is supplied to the substrate layer 403 and the conductive layer 500 so as to separate the conductive adhesive member 400 from the conductive layer 500, power of the battery may be delivered to the positive electrode connecting part 441 and/or the negative electrode connecting part through the switching circuit, for example the switching circuit of the printed circuit board.

According to various embodiments, the conductive adhesive member 400 may be disposed close to the first conductive portion 311 used as the first antenna A1 and/or the second conductive portion 312 used as the second antenna A2 and the third antenna A3, and due to such close arrangement, the first to third antenna A1 to A3 may be subject to interference and radiation performance thereof may be reduced.

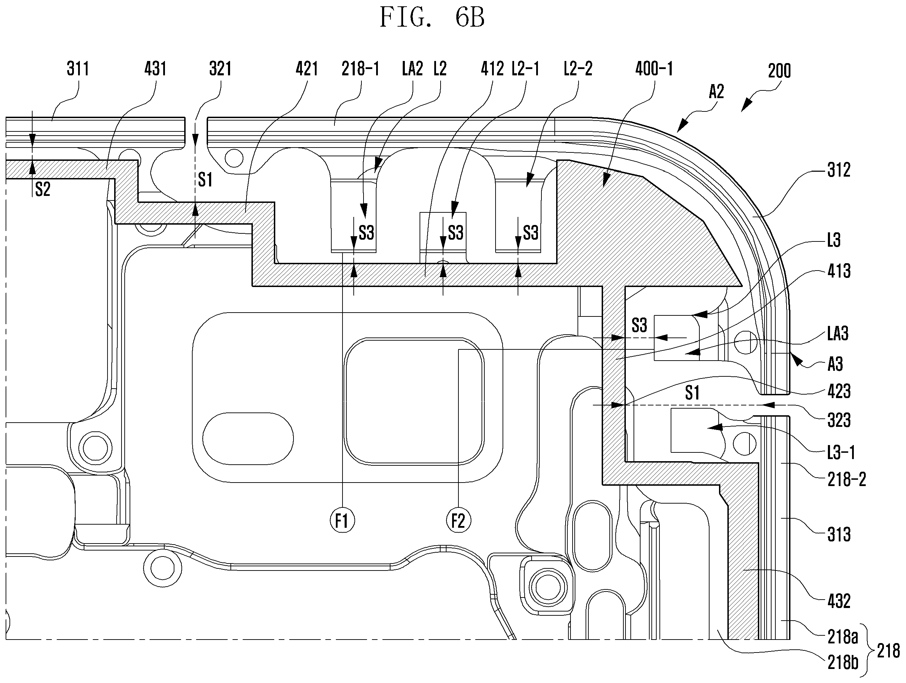

According to various embodiments, the conductive adhesive member 400 may be disposed to be spaced apart from the first non-conductive portion 321, the second non-conductive portion 322, and/or the third non-conductive portion 323, thereby reducing interference received by the first antenna A1, the second antenna A2, and/or the third antenna A3 and helping improve radiation performance. In an embodiment, the conductive adhesive member 400 may include a first adhesive portion (e.g., a segmentation-spaced adhesive portion) spaced apart from the first to third non-conductive portions 321, 322, and 323 by a first distance (e.g., the first distance S1 of FIG. 6B). In an embodiment, a positive electrode connecting part 441 and/or a negative electrode connecting part (e.g., the negative electrode connecting part of FIG. 4D) may be disposed at a position not overlapping the first adhesive portion when the back cover (e.g., the back cover 211 of FIG. 4A) is viewed from above (e.g., in the z-axis direction).

According to various embodiments, the first adhesive portion may include one or more segmentation-spaced adhesive portions (which may also be referred to as near-spaced adhesive portions). The segmentation-spaced adhesive portions may be disposed to correspond to the non-conductive portions. For example, the first adhesive portion may include a first segmentation-spaced adhesive portion 421, a second segmentation-spaced adhesive portion 422, and/or a third segmentation-spaced adhesive portion 423. In an embodiment, the first segmentation-spaced adhesive portion 421 may be disposed such that the distance spaced apart from the first non-conductive portion 321 is longer than the distance spaced apart from the first conductive portion 311. The first segmentation-spaced adhesive portion 421 may be disposed to be spaced apart from the first non-conductive portion 321 by a first distance (e.g., the first distance S1 of FIG. 6B). For example, the first distance may be measured from an inner surface of the first non-conductive portion 321 (or a line parallel to the inner surfaces of the first conductive portion 311 and second conductive portion 312 at the point at which they meet the first non-conductive portion 321) to the closest outer surface of the first segmentation-spaced adhesive portion 421 in a direction perpendicular to the inner surface of the first non-conductive portion 321 (e.g. in the y-axis direction). The (2-1)^{th} adhesive portion 431 may be disposed parallel to the first conductive portion 311, and the first segmentation-spaced adhesive portion 421 may be disposed to be spaced apart from the first non-conductive portion 321 by the first distance. For example, the first segmentation-spaced adhesive portion 421 may be a portion of the conductive adhesive member 400 disposed to correspond to the first non-conductive portion 321. For example, at least part of the first segmentation-spaced adhesive portion 421 may be aligned with or overlap the first non-conductive portion 321 when the electronic device is viewed from the top (e.g. in the y-axis direction). In an embodiment, the second segmentation-spaced adhesive portion 422 may be disposed such that the distance spaced apart from the second non-conductive portion 322 is greater than the distances spaced apart from the first conductive portion 311 and the fourth conductive portion 314. The second segmentation-spaced adhesive portion 422 may be disposed to be spaced apart from the second non-conductive portion 322 by the first distance. For example, the first distance may be measured from an inner surface of the second non-conductive portion 322 (or a line parallel to the inner surfaces of the first conductive portion 311 and fourth conductive portion 314 at the point at which they meet the second non-conductive portion 322) to the closest outer surface of the second segmentation-spaced adhesive portion 422 in a direction perpendicular to the inner surface of the second non-conductive portion 322 (e.g. in the x-axis direction). The (2-4)^{th} adhesive portion 434 may be disposed parallel to the first conductive portion 311, and the second segmentation-spaced adhesive portion 422 may be disposed to be spaced apart from the second non-conductive portion 322 by the first distance. For example, the second segmentation-spaced adhesive portion 422 may be a portion of the conductive adhesive member 400 disposed to correspond to the second non-conductive portion 322. For example, at least part of the second segmentation-spaced adhesive portion 422 may be aligned with or overlap the second non-conductive portion 322 when the electronic device is viewed from the side (e.g. in the x-axis direction). In an embodiment, the third segmentation-spaced adhesive portion 423 may be disposed such that the distance spaced apart from the third non-conductive portion 323 is longer than the distances spaced apart from the second conductive portion 312 and the third conductive portion 313. The (2-2)^{th} adhesive portion 432 may be disposed to be spaced apart from the third non-conductive portion 323 by the first distance. The (2-2)^{th} adhesive portion 432 may be disposed parallel to the second conductive portion 312 and the third conductive portion 313, and the third segmentation-spaced adhesive portion 423 may be disposed to be spaced apart from the third non-conductive portion 323 by the first distance. For example, the third segmentation-spaced adhesive portion 423 may be a portion of the conductive adhesive member 400 disposed to correspond to the third non-conductive portion 323. For example, at least part of the third segmentation-spaced adhesive portion 423 may be aligned with or overlap the third non-conductive portion 323 when the electronic device is viewed from the side (e.g. in the x-axis direction). For example, the first distance may be measured from an inner surface of the third non-conductive portion 323 (or a line parallel to the inner surfaces of the second conductive portion 312 and third conductive portion 313 at the point at which they meet the third non-conductive portion 323) to the closest outer surface of the third segmentation-spaced adhesive portion 423 in a direction perpendicular to the inner surface of the third non-conductive portion 323 (e.g. in the x-axis direction). In an embodiment, the first distance may be about 0.7 mm or more. In an embodiment, the first distance may be about 2 mm or more. In an embodiment, the first distance may be about 0.7 mm or more and 2 mm or less.

According to various embodiments, the second adhesive portion may include one or more near-spaced adhesive portions (which may also be referred to as (2-n)^{th} adhesive portions). The near-spaced adhesive portions may be disposed to correspond to the conductive portions. For example, the second adhesive portion may include a (2-1)^{th} adhesive portion 431, a (2-2)^{th} adhesive portion 432, a (2-3)^{th} adhesive portion (not illustrated), and/or a (2-4)^{th} adhesive portion 434. In an embodiment, the (2-1)^{th} adhesive portion 431 may be disposed in contact with the first conductive portion 311 or spaced apart from the first conductive portion 311 by a second distance (e.g., the second distance S2 of FIG. 6B). For example, the second distance may be measured from an inner surface of the first conductive portion 311 to the closest outer surface of the (2-1)^{th} adhesive portion 431 in a direction perpendicular to the inner surface of the first conductive portion 311. In an embodiment, the (2-2)^{th} adhesive portion 432 may be disposed in contact with the first conductive portion 311 and/or the third conductive portion 313, or spaced apart from the first conductive portion 311 and/or the third conductive portion 313 by the second distance. For example, the second distance may be measured from an inner surface of the first conductive portion 311 and/or the third conductive portion 313 to the closest outer surface of the (2-2)^{th} adhesive portion 432 in a direction perpendicular to the inner surface of the first conductive portion 311 and/or the third conductive portion 313. In an embodiment, the (2-4)^{th} adhesive portion 434 may be disposed in contact with the first conductive portion 311 and/or the fourth conductive portion 314, or spaced apart from the first conductive portion 311 and/or the fourth conductive portion 314 by the second distance. For example, the second distance may be measured from an inner surface of the first conductive portion 311 and/or the fourth conductive portion 314 to the closest outer surface of the (2-4)^{th} adhesive portion 434 in a direction perpendicular to the inner surface of the first conductive portion 311 and/or the fourth conductive portion 314. In an embodiment, the second distance may be shorter than the first distance.

According to various embodiments, the positive electrode connecting part 441 and/or the negative electrode connecting part (e.g., the negative electrode connecting part 542 of FIG. 4D) may be disposed to be spaced apart from the first to third non-conductive portions 321, 322, and 323 and/or the first to third feeding parts LA1, LA2, and LA3, thereby reducing interference received by the first antenna A1, the second antenna A2, and/or the third antenna A3. For example, the positive electrode connecting part 441 and/or the negative electrode connecting part (e.g., the negative electrode connecting part 542 of FIG. 4D) may be disposed such that they do not overlap the first to third non-conductive portions 321, 322, and 323 and/or the first to third feeding parts LA1, LA2, and LA3, when the back cover (e.g., the back cover 211 of FIG. 4A) is viewed from above (e.g., in the z-axis direction). For example, the positive electrode connecting part 441 and/or the negative electrode connecting part (e.g., the negative electrode connecting part 542 of FIG. 4D) may be disposed to be spaced apart from the first to third non-conductive portions 321, 322, and 323 and/or the first to third feeding parts LA1, LA2, and LA3, by at least a certain distance, wherein the certain distance is calculated to reduce interference received by the first antenna A1, the second antenna A2, and/or the third antenna A3. For example, the certain distance may be at least the first distance. The positive electrode connecting part 441 may extend from at least a portion of the (2-4)^{th} adhesive portion 434 of the conductive adhesive member 400. The negative electrode connecting part may extend from at least a portion of the (5-2)^{th} adhesive portion 532 of the conductive layer 500. In an embodiment, at least a portion of the positive electrode connecting part 441 may be connected to the (2-4)^{th} adhesive portion 434 of the conductive adhesive member 400 and to the positive electrode of the battery. At least a portion of the negative electrode connecting part may be connected to the (5-2)^{th} adhesive portion 532 of the conductive layer 500 and to the negative electrode of the battery. In an embodiment, the positive electrode connecting part 441 may extend from at least a portion of the (5-4)^{th} adhesive portion 534 of the conductive layer 500. The negative electrode connecting part may extend from at least a portion of the (2-2)^{th} adhesive portion 432 of the conductive adhesive member 400.

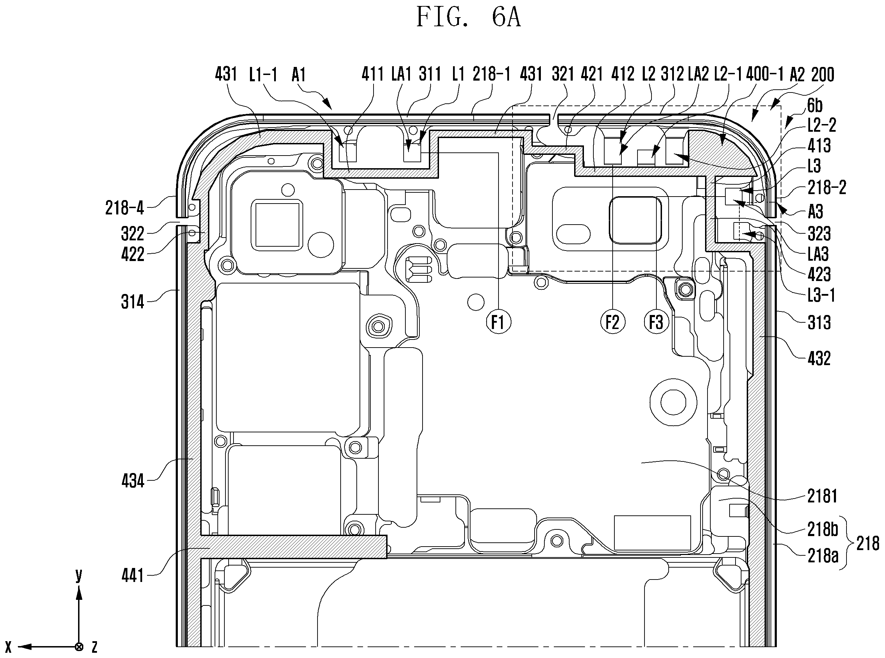

FIG. 6A is view illustrating a portion of a configuration of a conductive adhesive member spaced apart from a non-conductive portion of a lateral member and a feeding part of a wireless communication circuit according to various embodiments of the disclosure. FIG. 6B is an enlarged view of a portion of the adhesive portion of FIG. 6A according to various embodiments of the disclosure.

Referring to FIGS. 6A and 6B, the conductive adhesive member 400-1 may be disposed to be spaced apart from the first non-conductive portion 321, the second non-conductive portion 322, the third non-conductive portion 323, the first feeding part LA1, the second feeding part LA2, and/or the third feeding part LA3, thereby reducing interference received by the first antenna A1, the second antenna A2, and/or the third antenna A3. The conductive adhesive member 400-1 may include a third adhesive portion (e.g., a feeding part-spaced adhesive portion) spaced apart from the first to third feeding parts LA1, LA2, and LA3 by a third distance S3. In an embodiment, the positive electrode connecting part 441 and/or the negative electrode connecting part (e.g., the negative electrode connecting part 542 of FIG. 4D) may be disposed at a position not overlapping the first adhesive portion (e.g., the first segmentation-spaced adhesive portion 421, the second segmentation-spaced adhesive portion 422, and/or the third segmentation-spaced adhesive portion 423) and/or the third adhesive portion when the back cover (e.g., the back cover 211 of FIG. 4A) is viewed from above (e.g., in the z-axis direction). At least one of the components of the conductive adhesive member 400-1 may be the same as or similar to at least one of the components of the conductive adhesive member 400 of FIGS. 4A to 5, and a redundant description will be omitted below.

According to various embodiments, the third adhesive portion may include one or more feeding part-spaced adhesive portions. The feeding part-spaced adhesive portions may be disposed to correspond to the feeding parts. For example, the third adhesive portion may include a first feeding part-spaced adhesive portion 411, a second feeding part-spaced adhesive portion 412, and/or a third feeding part-spaced adhesive portion 413. In an embodiment, the first feeding part-spaced adhesive portion 411 may be disposed to be spaced apart from the first feeding part LA1 by a third distance S3. For example, the third distance may be measured from a surface of the first feeding part LA1 facing the first feeding part-spaced adhesive portion 411 to the closest outer surface of the first feeding part-spaced adhesive portion 411 in a direction perpendicular to the surface of the first feeding part LA1 (e.g. the y-axis direction). The second feeding part-spaced adhesive portion 412 may be disposed to be spaced apart from the second feeding part LA2 by the third distance S3. For example, the third distance may be measured from a surface of the second feeding part LA2 facing the second feeding part-spaced adhesive portion 412 to the closest outer surface of the second feeding part-spaced adhesive portion 412 in a direction perpendicular to the surface of the second feeding part LA2 (e.g. the y-axis direction). The (2-1)^{th} adhesive portion 431 may be disposed parallel to the first conductive portion 311. The first feeding part-spaced adhesive portion 411 may be disposed to be spaced apart from the first feeding part LA1 by the third distance S3. The second feeding part-spaced adhesive portion 412 may be disposed to be spaced apart from the second feeding part LA2 by the third distance S3. In an embodiment, the third feeding part-spaced adhesive portion 413 may be disposed to be spaced apart from the third feeding part LA3 by the third distance S3. For example, the third distance may be measured from a surface of the third feeding part LA3 facing the third feeding part-spaced adhesive portion 413 to the closest outer surface of the third feeding part-spaced adhesive portion 413 in a direction perpendicular to the surface of the third feeding part LA3 (e.g. the x-axis direction). The (2-2)^{th} adhesive portion 432 may be disposed parallel to the second conductive portion 312 and the third conductive portion 313, and the third feeding part-spaced adhesive portion 413 may be disposed to be spaced apart from the third feeding part LA3 by the third distance S3. In an embodiment, the third distance S3 may be about 0.7 mm or more. In an embodiment, the third distance S3 may be about 2 mm or more. In an embodiment, the third distance S3 may be about 0.7 mm or more and 2 mm or less.

According to various embodiments, the (2-1)^{th} adhesive portion 431 may be disposed parallel to the first conductive portion 311. The first segmentation-spaced adhesive portion 421 may be disposed to be spaced apart from the first non-conductive portion 321 by the first distance. The first feeding part-spaced adhesive portion 411 may be disposed to be spaced apart from the first feeding part LA1 by the third distance S3. The second feeding part-spaced adhesive portion 412 may be disposed to be spaced apart from the second feeding part LA2 by the third distance S3. In an embodiment, the (2-4)^{th} adhesive portion 434 may be disposed parallel to the first conductive portion 311. The second segmentation-spaced adhesive portion 422 may be disposed to be spaced apart from the second non-conductive portion 322 by the first distance. In an embodiment, the (2-2)^{th} adhesive portion 432 may be disposed parallel to the second conductive portion 312 and the third conductive portion 313. The (3)^{th} segmentation-spaced adhesive portion 423 may be disposed to be spaced apart from the third non-conductive portion 323 by the first distance. The third feeding part-spaced adhesive portion 413 may be disposed to be spaced apart from the third feeding part LA3 by the third distance S3. In an embodiment, the third distance S3 may be longer than the second distance S2. In an embodiment, the third distance S3 may be shorter than the first distance S1.

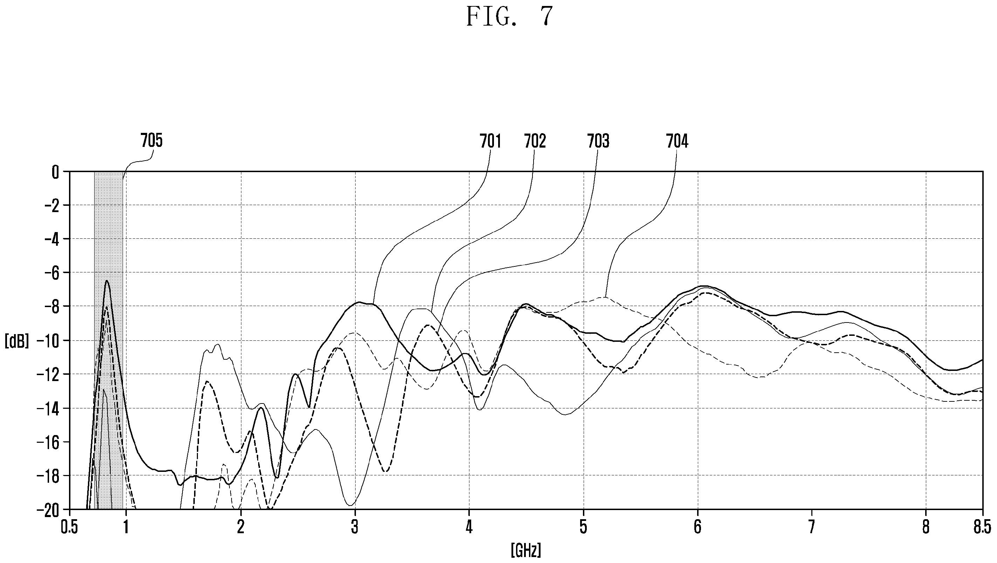

FIG. 7 is a graph comparatively showing first antenna radiation performance of a non-conductive adhesive member, a conductive adhesive member, a conductive adhesive member spaced apart from a non-conductive portion of a lateral member, and a conductive adhesive member spaced apart from a non-conductive portion of the lateral member and a feeding part of a wireless communication circuit, according to various embodiments of the disclosure.

Referring to FIG. 7, in comparison with a comparative example (e.g., graph 702) in which portions of the conductive adhesive member 400 corresponding to the first non-conductive portion 321 and the second non-conductive portion 322 are disposed to have the same proximity distance as portions adjacent to the first conductive portion 311, in a first case (e.g., graph 703) where, according to an exemplary embodiment of the disclosure, portions of the conductive adhesive member 400 corresponding to the first non-conductive portion 321 and the second non-conductive portion 322 are disposed to be spaced apart from the first conductive portion 311 by a relatively longer first distance (e.g., the first distance S1 of FIG. 6B), and/or in a second case (e.g., graph 704) where portions of the conductive adhesive member 400 corresponding to the first and second non-conductive portions 321 and 322 and the first feeding part LA1 are disposed to be spaced apart from the first conductive portion 311 by a relatively longer first distance (e.g., the first distance S1 of FIG. 6B) or a third distance (e.g., the third distance S3 of FIG. 6B), it can be seen that the first antenna A1 operating through the first conductive portion 311 exhibits excellent radiation performance in a specific frequency band (e.g., low band) (e.g., a frequency band in the range of about 600 MHz to 960 MHz, or adhesive portion 705).

Furthermore, in the first case and the second case according to an exemplary embodiment of the disclosure, it can be confirmed that the radiation performance of the first antenna A1 exhibits a substantially equivalent level of radiation performance compared to the case where the conductive adhesive member is replaced with a non-conductive adhesive member or the case where the conductive adhesive member is not applied (e.g., graph 701).

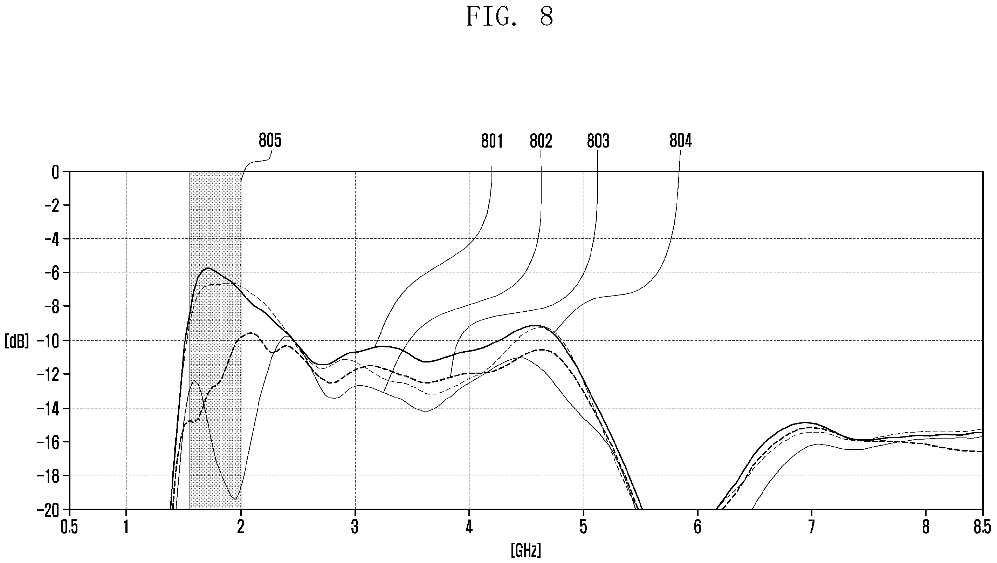

FIG. 8 is a graph comparatively showing second antenna radiation performance of a non-conductive adhesive member, a conductive adhesive member, a conductive adhesive member spaced apart from a non-conductive portion of a lateral member, and a conductive adhesive member spaced apart from a non-conductive portion of the lateral member and a feeding part of a wireless communication circuit, according to various embodiments of the disclosure.

Referring to FIG. 8, in comparison with a comparative example (e.g., graph 802) in which portions of the conductive adhesive member 400 corresponding to the first non-conductive portion 321 and the third non-conductive portion 323 are disposed to have the same proximity distance as portions adjacent to the second conductive portion 312, in a first case (e.g., graph 803) where, according to an exemplary embodiment of the disclosure, portions of the conductive adhesive member 400 corresponding to the first non-conductive portion 321 and the third non-conductive portion 323 are disposed spaced apart from the second conductive portion 312 by a relatively longer first distance (e.g., the first distance S1 of FIG. 6B), and/or in a second case (e.g., graph 804) where portions of the conductive adhesive member 400 corresponding to the first and third non-conductive portions 321 and 323 and the second feeding part LA2 are disposed to be spaced apart from the second conductive portion 312 by a relatively longer first distance (e.g., the first distance S1 of FIG. 6B) or a third distance (e.g., the third distance S3 of FIG. 6B), it can be seen that the second antenna A2 operating through the second conductive portion 312 exhibits excellent radiation performance in a specific frequency band (e.g., mid-band) (e.g., a frequency band in the range of about 1700 MHz to 2200 MHz, or adhesive portion 805).

Furthermore, in the first case and the second case according to an exemplary embodiment of the disclosure, it can be confirmed that the radiation performance of the second antenna A2 exhibits a substantially equivalent level of radiation performance compared to the case where the conductive adhesive member is replaced with a non-conductive adhesive member or the case where the conductive adhesive member is not applied (e.g., graph 801).

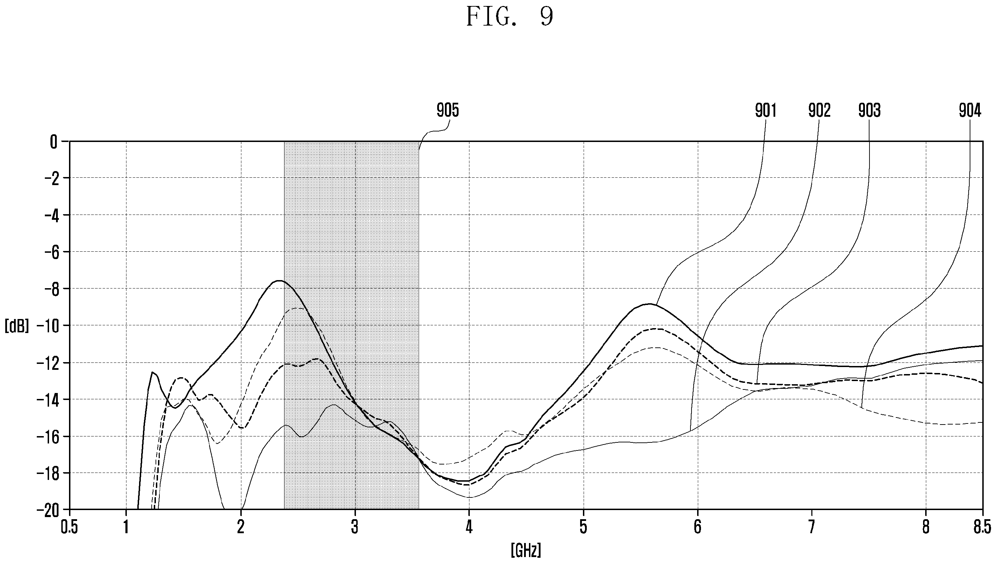

FIG. 9 is a graph comparatively showing third antenna radiation performance of a non-conductive adhesive member, a conductive adhesive member, a conductive adhesive member spaced apart from a non-conductive portion of a lateral member, and a conductive adhesive member spaced apart from a non-conductive portion of the lateral member and a feeding part of a wireless communication circuit, according to various embodiments of the disclosure.

Referring to FIG. 9, in comparison with a comparative example (e.g., graph 902) in which portions of the conductive adhesive member 400 corresponding to the first non-conductive portion 321 and the third non-conductive portion 323 are disposed to have the same proximity distance as portions adjacent to the second conductive portion 312, in a first case (e.g., graph 903) where, according to an exemplary embodiment of the disclosure, portions of the conductive adhesive member 400 corresponding to the first non-conductive portion 321 and the third non-conductive portion 323 are disposed to be spaced apart from the second conductive portion 312 by a relatively longer first distance (e.g., the first distance S1 of FIG. 6B), and/or in a second case (e.g., graph 904) where portions of the conductive adhesive member 400 corresponding to the first and third non-conductive portions 321 and 323 and the second feeding part LA2 are disposed to be spaced apart from the second conductive portion 312 by a relatively longer first distance (e.g., the first distance S1 of FIG. 6B) or a second distance (e.g., the second distance S2 of FIG. 6B), it can be seen that the third antenna A3 operating through the second conductive portion 312 exhibits excellent radiation performance in a specific frequency band (e.g., high band and/or UHB band) (e.g., a frequency band in the range of about 2300 MHz to 2800 MHz and/or about 3.2 GHz to 4.5 GHz, or adhesive portion 905).

Furthermore, in the first case and the second case according to an exemplary embodiment of the disclosure, it can be confirmed that the radiation performance of the third antenna A3 exhibits a substantially equivalent level of radiation performance compared to the case where the conductive adhesive member is replaced with a non-conductive adhesive member or the case where the conductive adhesive member is not applied (e.g., graph 901).

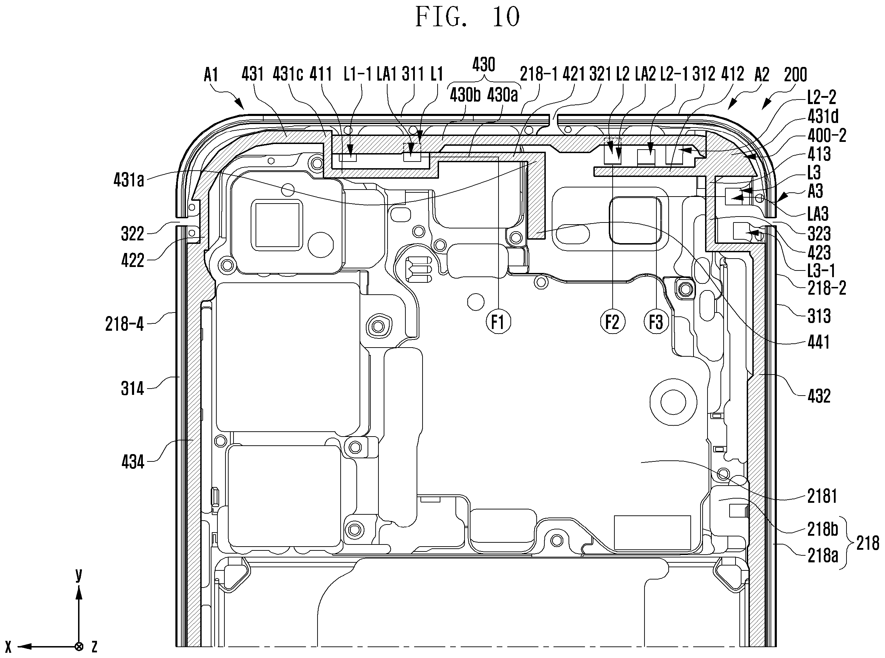

FIG. 10 is a view illustrating a portion of a configuration of a conductive adhesive member and a non-conductive adhesive member spaced apart from a non-conductive portion of a lateral member and a feeding part of a wireless communication circuit, according to various embodiments of the disclosure.

Referring to FIG. 10, the conductive adhesive member 400-2 may be formed by connecting an at least partially segmented conductive adhesive portion 430a and a non-conductive adhesive portion 430b disposed in a segmented adhesive portion of the conductive adhesive member. At least a portion of the conductive adhesive member 400-2 (e.g. segmented conductive adhesive portion 430a) may be connected to the non-conductive adhesive portion 430b to form a shape at least partially surrounding the space between a front cover (e.g., the front cover 202 of FIG. 3) and a back cover (e.g., the back cover 211 of FIG. 3). For example, the conductive adhesive member 400-2 may be formed in a loop shape by connecting the non-conductive adhesive portion 430b to formed to at least a portion (431c, 431d) of a (2-1)^{th} adhesive portion 431 of the conductive adhesive portion 430a. For example, one end of the non-conductive adhesive portion 430b may be connected to a first part 431c of the (2-1)^{th} adhesive portion 431 and the other end of the non-conductive adhesive portion 430b may be connected to a second part 431d of the (2-1)^{th} adhesive portion 431. By forming the adhesive member 400 in a continuous closed loop shape, foreign substances such as dust or moisture introduced into the space between a front cover (e.g., the front cover 202 of FIG. 3) and a back cover (e.g., the back cover 211 of FIG. 3) may be blocked. At least one of the components of the conductive adhesive member 400-2 may be the same as or similar to at least one of the components of the conductive adhesive member 400 of FIGS. 4A to 5 and/or the conductive adhesive member 400-1 of FIGS. 6A and 6B, and a redundant description will be omitted below.

According to various embodiments, the (2-1)^{th} adhesive portion 431 of the conductive adhesive portion 430a may be formed by segmenting (for example, by introducing a gap into) an adhesive portion adjacent to the second non-conductive portion 321. A conductive layer (not illustrated) may be formed to correspond to the shape of the conductive adhesive portion 430a. In an embodiment, a positive electrode connecting part 441 may be formed to extend from one end 431a of the segmented adhesive portion of the (2-1)^{th} adhesive portion 431. A negative electrode connecting part (not illustrated) may be formed to extend from one end (not illustrated) of a segmented adhesive portion of a (5-1)^{th} adhesive portion (not illustrated). In an embodiment, at least a portion of the positive electrode connecting part 441 may be electrically connected to one end 431a of the segmented adhesive portion of the (2-1)^{th} adhesive portion 431. At least a portion of the negative electrode connecting part may be electrically connected to one end of the segmented adhesive portion of the (5-1)^{th} adhesive portion.

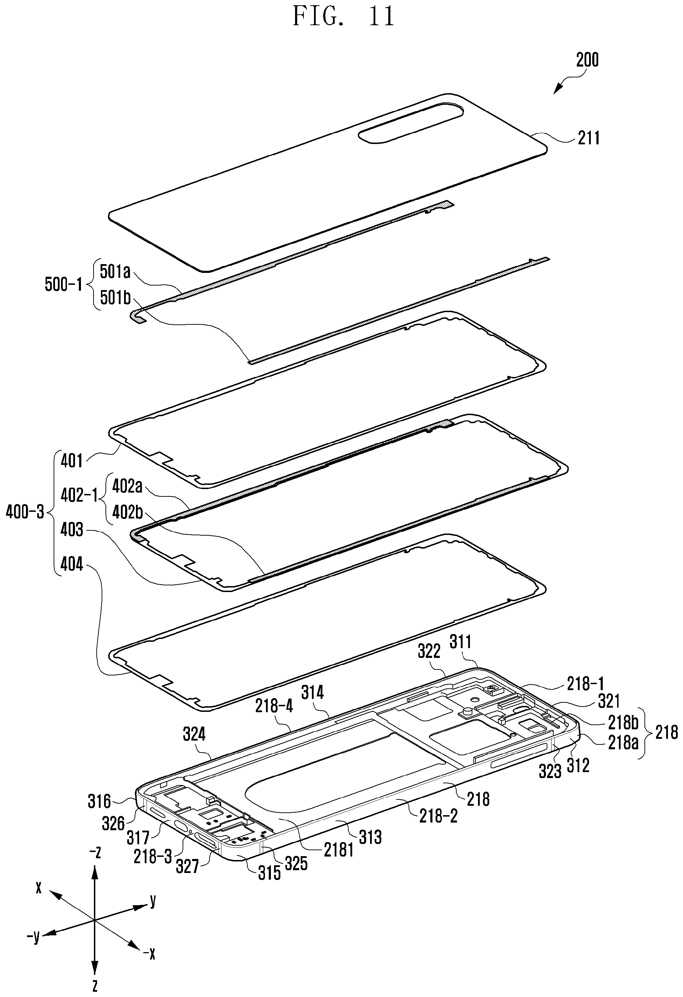

FIG. 11 is an exploded perspective view of the electronic device according to various embodiments of the disclosure.

Referring to FIG. 11, the electronic device 200 may include a lateral member 218, a first support member 2181, a conductive adhesive member 400-3, a conductive layer 500-1, and a back cover 211. The conductive adhesive member 400-3 may include a substrate layer 403, a voltage supply layer 402-1 disposed on one surface of the substrate layer 403, a first adhesive layer 401 laminated on the voltage supply layer 402-1, and a second adhesive layer 404 disposed on the other surface of the substrate layer 403. The voltage supply layer 402-1 may be formed by being segmented into a first voltage supply layer 402a and a second voltage supply layer 402b. The conductive layer 500-1 may be formed by being segmented into a first conductive layer 501a and a second conductive layer 501b. At least one of the components of the conductive adhesive member 400-3 may be the same as or similar to at least one of the components of the conductive adhesive member 400 of FIGS. 4A to 5, the conductive adhesive member 400-1 of FIGS. 6A and 6B, and/or the conductive adhesive member 400-2 of FIG. 10, and a redundant description will be omitted below. At least one of the components of the voltage supply layer 402-1 may be the same as or similar to at least one of the components of the voltage supply layer 402 of FIGS. 4A to 10, and a redundant description will be omitted below.

According to various embodiments, the first adhesive layer 401 and the second adhesive layer 404 may be formed in a loop shape, and the substrate layer 403 may be disposed on at least a portion of the first adhesive layer 401 and the second adhesive layer 404. By forming the first adhesive layer 401 and/or the second adhesive layer 404 in a continuous closed-loop shape, foreign substances such as moisture introduced into the space between the lateral member 218 and the back cover 211 may be blocked. The first adhesive layer 401 and/or the second adhesive layer 404 may be formed in corresponding shapes.

According to various embodiments, the conductive voltage supply layer 402-1 may be formed by being segmented into the first voltage supply layer 402a and the second voltage supply layer 402b and may be disposed to avoid antennas (e.g., the first, second, and third antennas A1, A2, and A3 of FIG. 5) disposed in the electronic device 200. The conductive layer 501-1 may be formed by being segmented into the first conductive layer 501a and the second conductive layer 501b and may be disposed to avoid antennas disposed in the electronic device 200. In this case, interference received by the antennas may be reduced, and improvement in radiation performance of the antennas may be achieved.

According to various embodiments, the voltage supply portion may include a positive electrode connecting part (e.g., the positive electrode connecting part 441 of FIG. 4C) extending from at least a portion of the voltage supply layer 402-1 to an inner space, and a negative electrode connecting part (e.g., the negative electrode connecting part 542 of FIG. 4D) extending from at least a portion of the conductive layer 500-1 to the inner space. When power is supplied to the positive electrode connecting part, power may be supplied to the voltage supply layer 402-1. When power is supplied to the negative electrode connecting part, power may be supplied to the second conductive layer 500-1. In an embodiment, when power is supplied to the voltage supply layer 402-1 and the conductive layer 500-1, cations and anions included in the first adhesive layer 401 may be rearranged such that ions of the same polarity gather together. As a result, the bonding force between the first adhesive layer 401 and the conductive layer 500-1 may be reduced, and the conductive adhesive member 400-3 may be separated from the conductive layer 500.

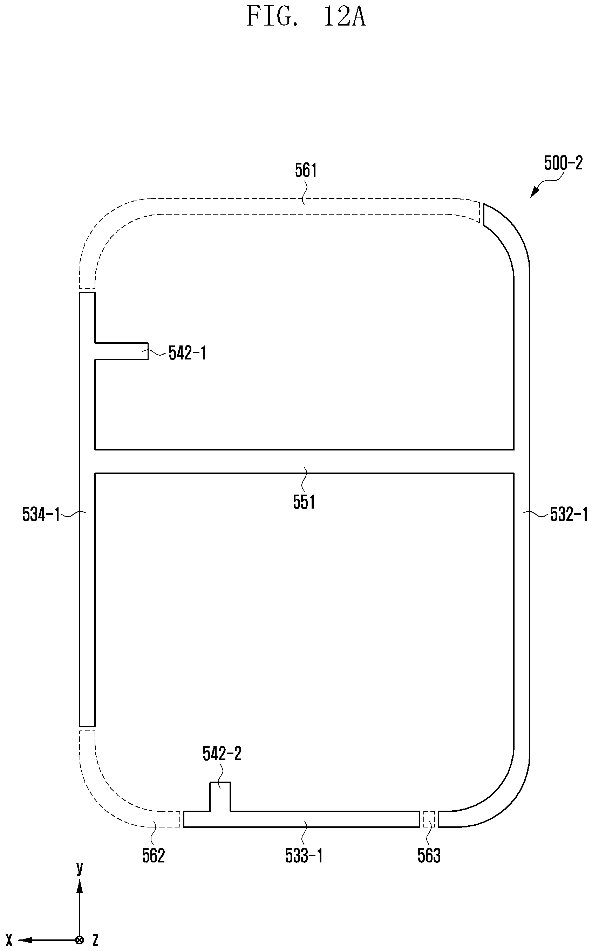

FIGS. 12A to 12E are views each illustrating a configuration of a conductive layer according to various embodiments of the disclosure. A conductive layer may include a plurality of adhesive portions that are at least partially segmented by one or more segmentation areas corresponding to non-conductive portions. The segmented adhesive portions may be connected by one or more connecting portions.

Referring to FIG. 12A, in an embodiment, a conductive layer 500-2 may include a (5-2)^{th} adhesive portion 532-1, a (5-3)^{th} adhesive portion 533-1, and a (5-4)^{th} adhesive portion 534-1 that are at least partially segmented. The conductive layer 500-2 may be formed by being segmented such that portions corresponding to non-conductive portions (e.g., the first non-conductive portion 321, the second non-conductive portion 322, the fourth non-conductive portion 324, the sixth non-conductive portion 326, and/or the seventh non-conductive portion 327 of FIGS. 2A and 2B) disposed at least partially in a lateral member (e.g., the lateral member 218 of FIG. 2A) of an electronic device (e.g., the electronic device 200 of FIG. 2A) are segmented. The (5-2)^{th} adhesive portion 532-1 and the (5-4)^{th} adhesive portion 534-1 may be electrically connected through a first connecting part 551. The conductive layer 500-2 may be applied in various shapes according to the form of an inner space of an electronic device (e.g., the electronic device 200 of FIG. 3), and may be designed in consideration of an arrangement structure with surrounding electronic components or structures. At least one of the components of the conductive layer 500-2 may be the same as or similar to at least one of the components of the conductive layer 500 of FIGS. 4A to 10 and/or the conductive layer 500-1 of FIG. 11, and a redundant description will be omitted below.

According to various embodiments, a conductive adhesive member (not illustrated) may be formed to correspond to the shape of the conductive layer 500-2. In an embodiment, the conductive layer 500-2 may include a first negative electrode connecting part 542-1 extending from the (5-4)^{th} adhesive portion 534-1 to an inner space and a second negative electrode connecting part 542-2 extending from the (5-3)^{th} adhesive portion 533-1 to the inner space. A positive electrode connecting part (not illustrated) may be formed to extend from at least a portion of the conductive adhesive member to the inner space. In an embodiment, the first negative electrode connecting part 542-1 and the second negative electrode connecting part 542-2 may be electrically connected to the conductive layer 500-2. The positive electrode connecting part may be electrically connected to the conductive adhesive member.

According to various embodiments, the conductive layer 500-2 may include one or more segmentation areas. The segmentation areas may be gaps in the conductive layer 500-2 and may be disposed to correspond to the non-conductive portions. For example, the conductive layer 500-2 may include a first segmentation area 561, a second segmentation area 562, and/or a third segmentation area 563. At least a portion of the first segmentation area 561 may be formed to correspond to the first non-conductive portion 321 and the second non-conductive portion 322. At least a portion of the second segmentation area 562 may be formed to correspond to the fourth non-conductive portion 324 and the sixth non-conductive portion 326. The third segmentation area 563 may be formed to correspond to the seventh non-conductive portion 327. The conductive layer 500-2 may be disposed to be spaced apart from the first, second, fourth, sixth, and seventh non-conductive portions 321, 322, 324, 326, and 327, thereby reducing interference received by the first antenna A1 and/or the second antenna A2 and helping improve radiation performance.

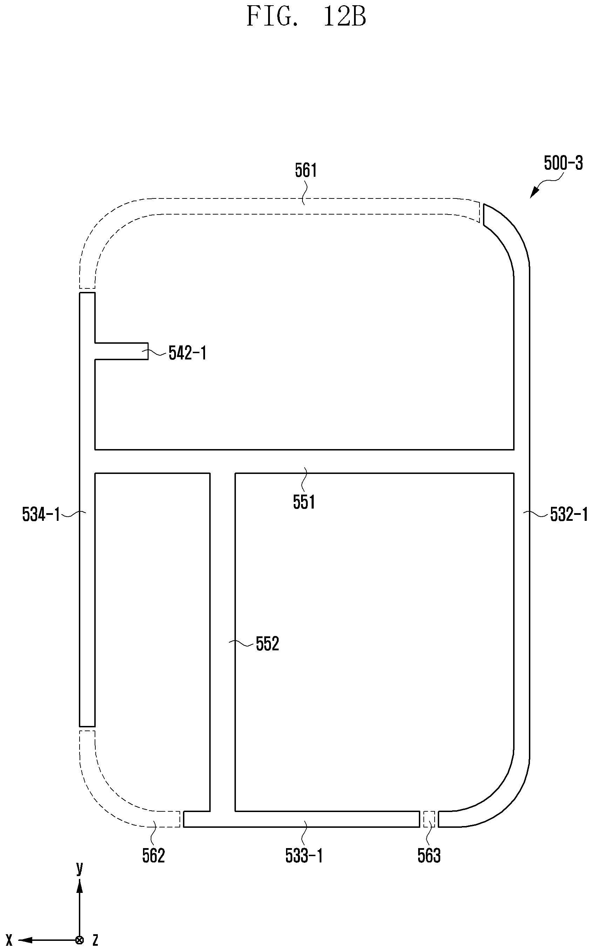

Referring to FIG. 12B, in an embodiment, the (5-3)^{th} adhesive portion 533-1 of the conductive layer 500-3 may be electrically connected to the (5-2)^{th} adhesive portion 532-1 and the (5-4)^{th} adhesive portion 534-1 by a first connecting part 551 and a second connecting part 552. A conductive adhesive member (not illustrated) may be formed to correspond to the shape of the conductive layer 500-3. In an embodiment, the conductive layer 500-3 may include a negative electrode connecting part 542-1 extending from the (5-4)^{th} adhesive portion 534-1 to the inner space. A positive electrode connecting part (not illustrated) may be formed to extend from at least a portion of the conductive adhesive member to the inner space. In an embodiment, the negative electrode connecting part 542-1 may be electrically connected to the conductive layer 500-2. The positive electrode connecting part may be electrically connected to the conductive adhesive member. At least one of the components of the conductive layer 500-3 may be the same as or similar to at least one of the components of the conductive layer 500 of FIGS. 4A to 10, the conductive layer 500-1 of FIG. 11, and/or the conductive layer 500-2 of FIG. 12A, and redundant description will be omitted below.

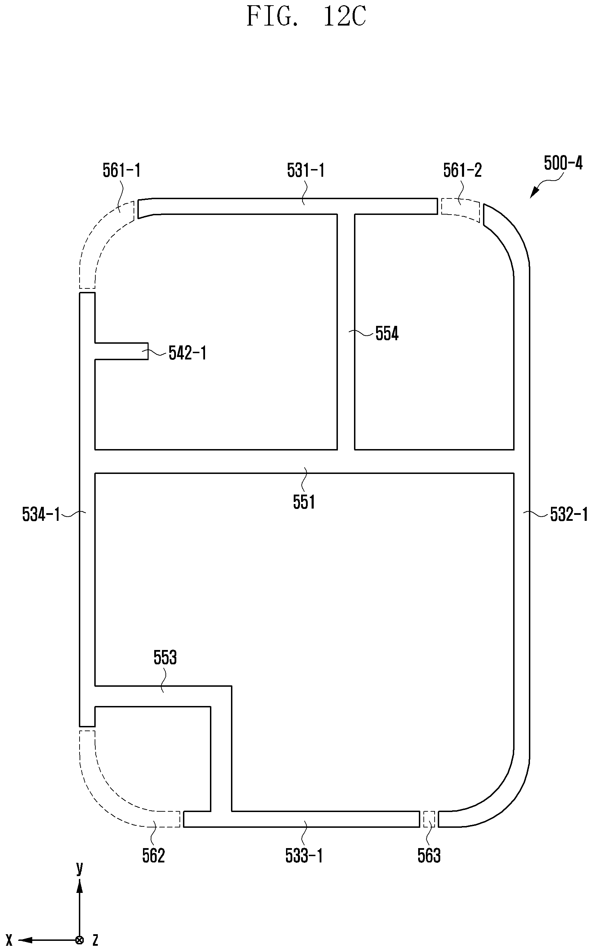

Referring to FIG. 12C, in an embodiment, the conductive layer 500-4 may include a (5-1)^{th} adhesive portion 531-1, a (5-2)^{th} adhesive portion 532-1, a (5-3)^{th} adhesive portion 533-1, and a (5-4)^{th} adhesive portion 534-1 that are at least partially segmented. The (5-3)^{th} adhesive portion 533-1 may be electrically connected to the (5-4)^{th} adhesive portion 534-1 by a third connecting part 553. The (5-1)^{th} adhesive portion 531-1 may be electrically connected to the (5-2)^{th} adhesive portion 532-1 and the (5-4)^{th} adhesive portion 534-1 by a first connecting part 551 and a fourth connecting part 554. The conductive layer 500-2 may include a (1-1)^{th} segmentation area 561-1, a (1-2)^{th} segmentation area 561-2, a second segmentation area 562, and/or a third segmentation area 563. At least a portion of the (1-1)^{th} segmentation area 561-1 may be formed to correspond to the second non-conductive portion 322. At least a portion of the (1-2)^{th} segmentation area 561-2 may be formed to correspond to the first non-conductive portion 321. The conductive layer 500-2 may be disposed to be spaced apart from the first, second, fourth, sixth, and seventh non-conductive portions 321, 322, 324, 326, and 327, thereby reducing interference received by the first antenna A1 and/or the second antenna A2 and helping improve radiation performance. At least one of the components of the conductive layer 500-4 may be the same as or similar to at least one of the components of the conductive layer 500 of FIGS. 4A to 10, the conductive layer 500-1 of FIG. 11, the conductive layer 500-2 of FIG. 12A, the conductive layer 500-3 of FIG. 12B, and/or the conductive layer 500-4 of FIG. 12C, and a redundant description will be omitted below.

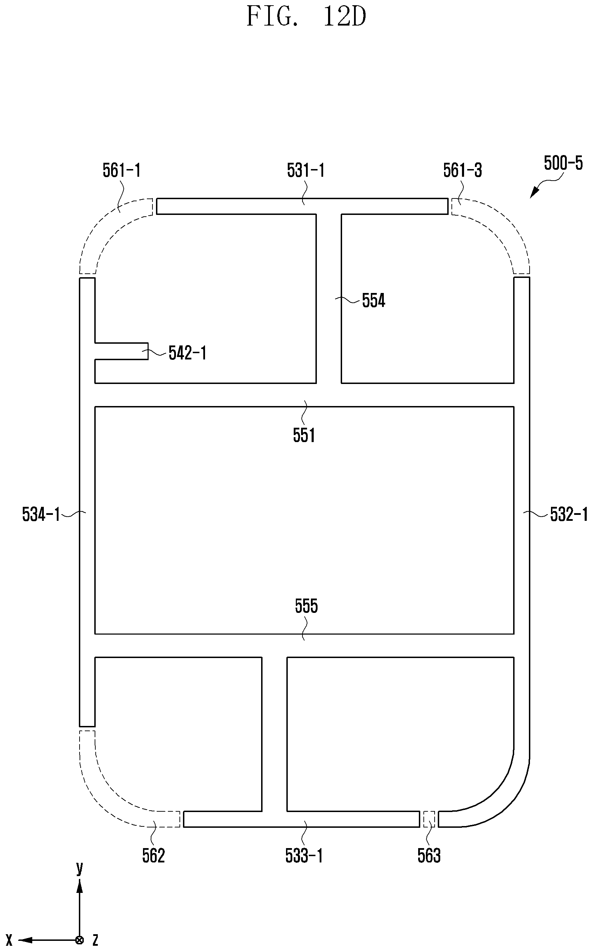

Referring to FIG. 12D, in an embodiment, a (5-3)^{th} adhesive portion 533-1 of the conductive layer 500-5 may be electrically connected to the (5-2)^{th} adhesive portion 532-1 and the (5-4)^{th} adhesive portion 534-1 by a fifth connecting part 555. The conductive layer 500-2 may include a (1-1)^{th} segmentation area 561-1, a (1-3)^{th} segmentation area 561-3, a second segmentation area 562, and/or a third segmentation area 563. At least a portion of the (1-3)^{th} segmentation area 561-3 may be formed to correspond to the second non-conductive portion 322 and the third non-conductive portion 323. The conductive layer 500-2 may be disposed to be spaced apart from the first, second, third, fourth, sixth, and seventh non-conductive portions 321, 322, 323, 324, 326, and 327, thereby reducing interference received by the first antenna A1, the second antenna A2, and/or the third antenna A3 and helping improve radiation performance. At least one of the components of the conductive layer 500-5 may be the same as or similar to at least one of the components of the conductive layer 500 of FIGS. 4A to 10, the conductive layer 500-1 of FIG. 11, the conductive layer 500-2 of FIG. 12A, the conductive layer 500-3 of FIG. 12B, and/or the conductive layer 500-4 of FIG. 12C, and a redundant description will be omitted below.

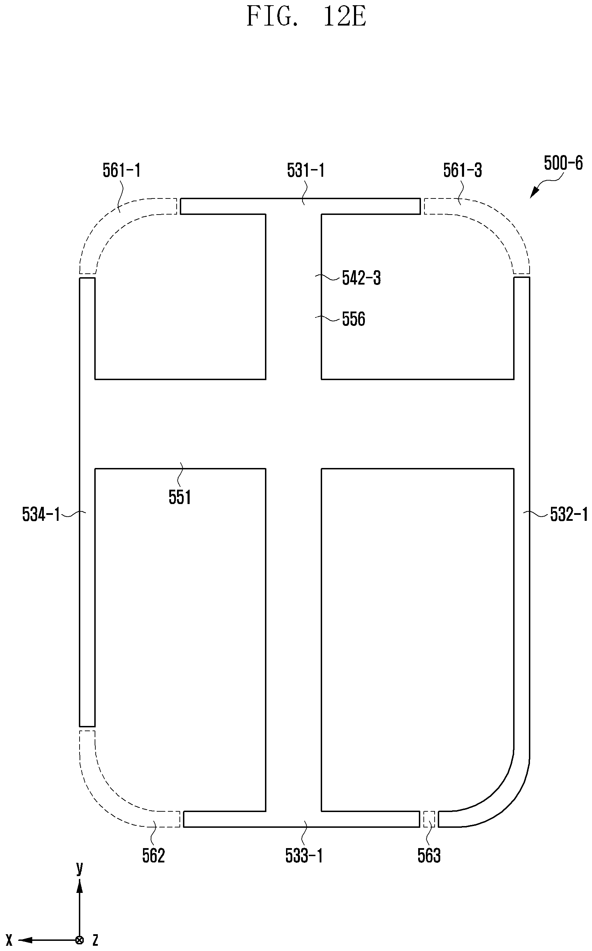

Referring to FIG. 12E, in an embodiment, the (5-1)^{th} adhesive portion 531-1 of the conductive layer 500-6 may be electrically connected to a (5-2)^{th} adhesive portion 532-1, a (5-3)^{th} adhesive portion 533-1, and a (5-4)^{th} adhesive portion 534-1 by a sixth connecting part 556. The sixth connecting part 556 may function as a negative electrode connecting part 542-3. For example, the negative electrode connecting part 542-3 may be formed of at least a portion of the sixth connecting part 556. At least one of the components of the conductive layer 500-6 may be the same as or similar to at least one of the components of the conductive layer 500 of FIGS. 4A to 10, the conductive layer 500-1 of FIG. 11, the conductive layer 500-2 of FIG. 12A, the conductive layer 500-3 of FIG. 12B, the conductive layer 500-4 of FIG. 12C, and/or the conductive layer 500-5 of FIG. 12D, and a redundant description will be omitted below.

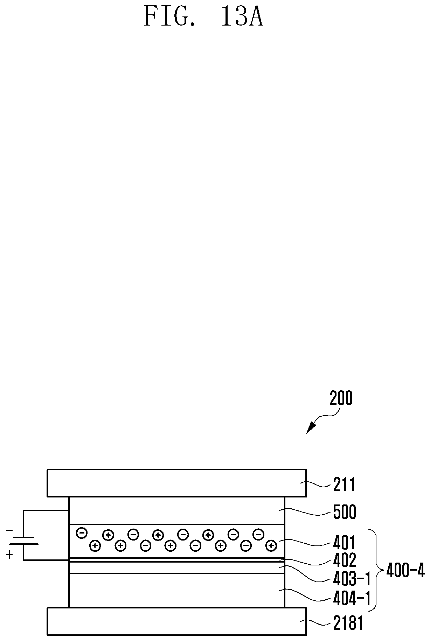

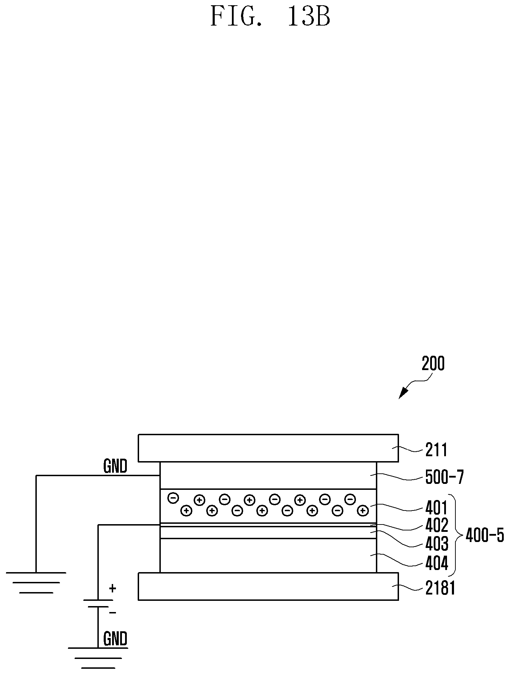

FIGS. 13A and 13B are views each illustrating a back cover attached to a first support member by a conductive adhesive member and a conductive layer according to various embodiments of the disclosure.

Referring to FIG. 13A, in an embodiment, the conductive adhesive member 400-4 may include a substrate layer 403-1, a voltage supply layer 402 disposed on one surface of the substrate layer 403-1, a first adhesive layer 401 laminated on the voltage supply layer 402, and a second adhesive layer 404-1 disposed on the other surface of the substrate layer 403-1. The substrate layer 403-1 and/or the second adhesive layer 404-1 may include a non-conductive waterproof material. The substrate layer 403-1 and/or the second adhesive layer 404-1 may be disposed to be aligned with edges of a lateral member (e.g., the lateral member 218 of FIG. 3) (e.g., the first side surface 218-1, the second side surface 218-2, the third side surface 218-3, and the fourth side surface 218-4 of FIG. 3). The substrate layer 403-1 and/or the second adhesive layer 404-1 may be formed in a continuous closed loop shape. Foreign substances such as dust or moisture introduced into a space between a front cover (e.g., the front cover 202 of FIG. 3) and a back cover may be blocked by the substrate layer 403-1 and/or the second adhesive layer 404-1. At least one of the components of the conductive adhesive member 400-4 may be the same as or similar to at least one of the components of the conductive adhesive member 400 of FIGS. 4A to 5, the conductive adhesive member 400-1 of FIGS. 6A and 6B, the conductive adhesive member 400-2 of FIG. 10, and/or the conductive adhesive member 400-3 of FIG. 11, and a redundant description will be omitted below. At least one of the components of the substrate layer 403-1 may be the same as or similar to at least one of the components of the substrate layer 403 of FIGS. 4A to 11, and a redundant description will be omitted below. At least one of the components of the second adhesive layer 404-1 may be the same as or similar to at least one of the components of the second adhesive layer 404 of FIGS. 4A to 11, and a redundant description will be omitted below.

Referring to FIG. 13B, in an embodiment, the electronic device 200 may include a voltage supply part connected to at least a portion of a conductive adhesive member 400-5 and at least a portion of a conductive layer 500-7. In an embodiment, the voltage supply part may include a positive electrode connecting part (e.g., the positive electrode connecting part 441 of FIG. 4C) extending from at least a portion of a voltage supply layer 402 of the conductive adhesive member 400-5 into an inner space, and a negative electrode connecting part (e.g., the negative electrode connecting part 542 of FIG. 4D) extending from at least a portion of the conductive layer 500-7 into the inner space. In an embodiment, the voltage supply part may be electrically connected to at least a portion of the conductive adhesive member 400-5 and at least a portion of the conductive layer 500. In an embodiment, the negative electrode connecting part of the voltage supply part may be connected to at least a portion of the conductive layer 500-7 and connected to ground (e.g., a reference potential of a wireless signal transmitted and/or received by a wireless communication circuit (e.g., the wireless communication circuit 192 of FIG. 1)). In an embodiment, the negative electrode connecting part of the voltage supply part may be omitted, and at least a portion of the conductive layer 500-7 may be connected to ground. In an embodiment, the positive electrode connecting part of the voltage supply part may be connected to at least a portion of the voltage supply layer 402 and electrically connected to a positive electrode of a battery (e.g., the battery 250 of FIG. 3) by a switching circuit, for example a switching circuit of a printed circuit board (e.g., the printed circuit board 240 of FIG. 3). In an embodiment, the positive electrode connecting part of the voltage supply part may be directly connected to the positive electrode of the battery. In an embodiment, when power is supplied to the voltage supply layer 402, a potential difference may occur between the voltage supply layer 402 and the conductive layer 500-7. In an embodiment, when a potential difference occurs between the voltage supply layer 402 and the conductive layer 500-7, cations and anions included in the first adhesive layer 401 may be rearranged so that ions of the same polarity gather together. As a result, bonding force between the first adhesive layer 401 and the conductive layer 500-7 may be reduced, and the conductive adhesive member 400-5 may be separated from the conductive layer 500-7. In some embodiments, at least a portion of the conductive layer 500-7 may be electrically connected to the positive electrode of the battery by a switching circuit of the printed circuit board. At least a portion of the voltage supply layer 402 may be connected to ground. At least one of the components of the conductive adhesive member 400-5 may be the same as or similar to at least one of the components of the conductive adhesive member 400 of FIGS. 4A to 5, the conductive adhesive member 400-1 of FIGS. 6A and 6B, the conductive adhesive member 400-2 of FIG. 10, the conductive adhesive member 400-3 of FIG. 11, and/or the conductive adhesive member 400-4 of FIG. 13A, and a redundant description will be omitted below. At least one of the components of the conductive layer 500-7 may be the same as or similar to at least one of the components of the conductive layer 500 of FIGS. 4A to 10, the conductive layer 500-1 of FIG. 11, the conductive layer 500-2 of FIG. 12A, the conductive layer 500-3 of FIG. 12B, the conductive layer 500-4 of FIG. 12C, the conductive layer 500-5 of FIG. 12D, and/or the conductive layer 500-6 of FIG. 12E, and a redundant description will be omitted below.

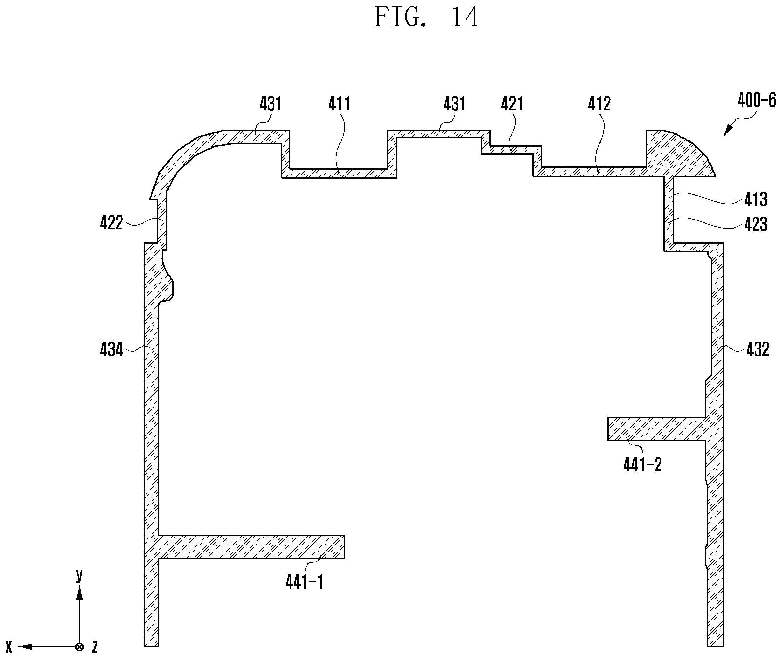

FIG. 14 is a view illustrating a portion of a configuration of a conductive adhesive member according to various embodiments of the disclosure.

Referring to FIG. 14, in an embodiment, the conductive adhesive member 400-6 may include a first positive electrode connecting part 441-1 extending from a (2-4)^{th} adhesive portion 434 into an inner space, and a second positive electrode connecting part 441-2 extending from a (2-2)^{th} adhesive portion 432 into the internal space. In an embodiment, the first positive electrode connecting part 441-1 and the second positive electrode connecting part 441-2 may be electrically connected to a voltage supply layer (e.g., the voltage supply layer 402 of FIG. 4B). At least one of the components of the conductive adhesive member 400-6 may be the same as or similar to at least one of the components of the conductive adhesive member 400 of FIGS. 4A to 5, the conductive adhesive member 400-1 of FIGS. 6A and 6B, the conductive adhesive member 400-2 of FIG. 10, the conductive adhesive member 400-3 of FIG. 11, the conductive adhesive member 400-4 of FIG. 13A, and/or the conductive adhesive member 400-5 of FIG. 13B, and a redundant description will be omitted below.

According to various embodiments, an electronic device (e.g., the electronic device 200 of FIG. 3) may include a housing (e.g., the housing 210 of FIG. 2A) including a front cover (e.g., the front cover 202 of FIG. 3), a back cover (e.g., the back cover 211 of FIG. 3) facing a direction opposite to the front cover, and a lateral member (e.g., the lateral member 218 of FIG. 3) surrounding a space between the front cover and the back cover, the lateral member including at least one non-conductive portion (e.g., the non-conductive portions 321, 322, 323, 324, 325, 326, and 327 of FIG. 3) and at least one conductive portion (e.g., the conductive portions 311, 312, 313, 314, 315, 316, and 317 of FIGS. 2A and 2B). The electronic device may further include a first support member (e.g., the first support member 2181 of FIG. 3) extending from the lateral member into the space, a loop-shaped conductive adhesive member (e.g., the conductive adhesive member 400 of FIG. 4A, the conductive adhesive member 400-1 of FIG. 6A, the conductive adhesive member 400-2 of FIG. 10, the conductive adhesive member 400-3 of FIG. 11, the conductive adhesive member 400-4 of FIG. 13A, the conductive adhesive member 400-5 of FIG. 13B, and/or the conductive adhesive member 400-6 of FIG. 14) disposed between the first support member and the back cover, and a wireless communication circuit (e.g., the wireless communication module 192 of FIG. 1) disposed in the space and configured to transmit and/or receive a wireless signal in at least one frequency band through the at least one conductive portion. The conductive adhesive member may include a first adhesive portion (e.g., the first segmentation-spaced adhesive portion 421 of FIG. 5, the second segmentation-spaced adhesive portion 422, and/or the third segmentation-spaced adhesive portion 423) spaced apart from the at least one non-conductive portion by a first distance (e.g., the first distance S1 of FIG. 6B), and a second adhesive portion (e.g., the (2-1)^{th} adhesive portion 431 of FIG. 5, the (2-2)^{th} adhesive portion 432, and/or the (2-4)^{th} adhesive portion 434) that is in contact with the at least one conductive portion or spaced apart from the at least one conductive portion by a second distance (e.g., the second distance S2 of FIG. 6B) smaller than the first distance.

According to various embodiments, the first distance may be formed to be 0.7 mm or more.

According to various embodiments, the lateral member may include at least one feeding part (e.g., the feeding parts LA1, LA2, and LA3 of FIG. 5) through which the at least one conductive portion is electrically connected to the wireless communication circuit, and the conductive adhesive member may include a third adhesive portion (e.g., the first feeding part-spaced adhesive portion 411, the second feeding part-spaced adhesive portion 412, and/or the third feeding part-spaced adhesive portion 413 of FIG. 6A) spaced apart from the at least one feeding part by a third distance (e.g., the third distance S3 of FIG. 6B) longer than the second distance.

According to various embodiments, the third distance may be 0.7 mm or more.

According to various embodiments, the electronic device may further include a conductive layer (e.g., the conductive layer 500 of FIG. 4A, the conductive layer 500-1 of FIG. 11, the conductive layer 500-2 of FIG. 12A, the conductive layer 500-3 of FIG. 12B, the conductive layer 500-4 of FIG. 12C, the conductive layer 500-5 of FIG. 12D, the conductive layer 500-6 of FIG. 12E, and/or the conductive layer 500-7 of FIG. 13B) at least partially disposed between the back cover and the conductive adhesive member.

According to various embodiments, the conductive adhesive member may include a substrate layer (e.g., the substrate layer 403 of FIG. 4B and/or the substrate layer 403-1 of FIG. 13A), a voltage supply layer (e.g., the voltage supply layer 402 of FIG. 4B and/or the voltage supply layer 402-1 of FIG. 11) disposed on a first surface of the substrate layer, a first adhesive layer (e.g., the first adhesive layer 401 of FIG. 4B) disposed on the voltage supply layer, and a second adhesive layer (e.g., the second adhesive layer 404 of FIG. 4B and/or the second adhesive layer 404-1 of FIG. 13A) disposed on a second surface of the substrate layer opposite to the first surface.

According to various embodiments, the conductive adhesive member may be attached to the first support member through the second adhesive layer, and the conductive layer may be attached to the conductive adhesive member through the first adhesive layer so as to be attached to the support member.

According to various embodiments, the electronic device may further include a battery (e.g., the battery 250 of FIG. 3) disposed in the space and including a positive electrode and a negative electrode, and one of the conductive adhesive member or the conductive layer may include at least one positive electrode connecting part (e.g., the positive electrode connecting part 441 of FIG. 4C and/or the first positive electrode connecting part 441-1 and the second positive electrode connecting part 441-2 of FIG. 14) electrically connected to the positive electrode of the battery.

According to various embodiments, the other one of the conductive adhesive member or the conductive layer may include at least one negative electrode connecting part (e.g., the negative electrode connecting part 542 of FIG. 4D, the first negative electrode connecting part 542-1 and the second negative electrode connecting part 542-2 of FIG. 12A, and/or the negative electrode connecting part 542-3 of FIG. 12E) electrically connected to the negative electrode of the battery or to a ground.

According to various embodiments, when power of the battery is supplied to the conductive adhesive member through the positive electrode connecting part, the conductive adhesive member may be configured to be separated from the back cover.

According to various embodiments, the electronic device may further include a printed circuit board (e.g., the printed circuit board 240 of FIG. 3) disposed in the space and electrically connected to the battery, and the positive electrode connecting part may be electrically connected to the positive electrode of the battery through the printed circuit board.

According to various embodiments, the printed circuit board may include an electronic component configured to amplify power supplied from the battery to the conductive adhesive member.

According to various embodiments, the positive electrode connecting part and/or the negative electrode connecting part may be disposed at a position not overlapping the first adhesive portion when viewed in a direction substantially perpendicular to the back cover.

According to various embodiments, the lateral member may include at least one feeding part (e.g., the feeding parts LA1, LA2, and LA3 of FIG. 5) through which the at least one conductive portion is electrically connected to the wireless communication circuit. The conductive adhesive member may include a third adhesive portion (e.g., the first feeding part-spaced adhesive portion 411, the second feeding part-spaced adhesive portion 412, and/or the third feeding part-spaced adhesive portion 413 of FIG. 6A) spaced apart from the at least one feeding part by a third distance (e.g., the third distance S3 of FIG. 6B) longer than the second distance. The positive electrode connecting part and/or the negative electrode connecting part may be disposed at a position not overlapping the third adhesive portion when viewed in a direction substantially perpendicular to the back cover.

According to various embodiments, the conductive adhesive member may guide static electricity introduced into the space to a ground.

According to various embodiments, an electronic device (e.g., the electronic device 200 of FIG. 3) may include a housing (e.g., the housing 210 of FIG. 2A) including a front cover (e.g., the front cover 202 of FIG. 3), a back cover (e.g., the back cover 211 of FIG. 3) facing a direction opposite to the front cover, and a lateral member (e.g., the lateral member 218 of FIG. 3) surrounding a space between the front cover and the back cover, the lateral member including at least one non-conductive portion (e.g., the non-conductive portions 321, 322, 323, 324, 325, 326, and 327 of FIG. 3) and at least one conductive portion (e.g., the conductive portions 311, 312, 313, 314, 315, 316, and 317 of FIGS. 2A and 2B). The electronic device may further include a first support member (e.g., the first support member 2181 of FIG. 3) extending from the lateral member toward the space, a conductive adhesive member (e.g., the conductive adhesive portion 430a of FIG. 10 or the voltage supply layer 402-1 of FIG. 11) having a portion at least partially segmented in shape and disposed between the first support member and the back cover, and a non-conductive adhesive member (e.g., the non-conductive adhesive portion 430b of FIG. 10, the first adhesive layer 401, the substrate layer 403, and/or the second adhesive layer 404 of FIG. 4B, and/or the substrate layer 403-1 and/or the second adhesive layer 404-1 of FIG. 13A) disposed at the segmented adhesive portion of the conductive adhesive member between the first support member and the back cover. The electronic device may further include a wireless communication circuit (e.g., the wireless communication module 192 of FIG. 1) disposed in the space and configured to transmit and/or receive a wireless signal in at least one frequency band through the at least one conductive portion. At least a portion of the conductive adhesive member may be connected to the non-conductive adhesive member to form a loop shape. The conductive adhesive member may include a first adhesive portion (e.g., the first segmentation-spaced adhesive portion 421, the second segmentation-spaced adhesive portion 422, and the third segmentation-spaced adhesive portion 423 of FIG. 5) spaced apart from the at least one non-conductive portion by a first distance (e.g., the first distance S1 of FIG. 6B), and a second adhesive portion (e.g., the (2-1)^{th} adhesive portion 431, the (2-2)^{th} adhesive portion 432, and/or the (2-4)^{th} adhesive portion 434 of FIG. 5) that is in contact with the at least one conductive portion or spaced apart from the at least one conductive portion by a second distance (e.g., the second distance S2 of FIG. 6B) shorter than the first distance.

According to various embodiments, the lateral member may include at least one feeding part (e.g., the feeding parts LA1, LA2, and LA3 of FIG. 5) formed on the at least one conductive portion and configured to supply the wireless signal to the wireless communication circuit. The conductive adhesive member may include a third adhesive portion (e.g., the first feeding part-spaced adhesive portion 411, the second feeding part-spaced adhesive portion 412, or the third feeding part-spaced adhesive portion 413 of FIG. 6A) spaced apart from the at least one feeding part by a second distance (e.g., the second distance S2 of FIG. 6B).

According to various embodiments, the electronic device may further include a conductive layer (e.g., the conductive layer 500 of FIG. 4A, the conductive layer 500-1 of FIG. 11, the conductive layers 500-2, 500-3, 500-4, and 500-5 of FIGS. 12A to 12D, the conductive layer 500-6 of FIG. 12E, and/or the conductive layer 500-7 of FIG. 13B) at least partially disposed between the back cover and the conductive adhesive member.

According to various embodiments, the electronic device may further include a battery (e.g., the battery 250 of FIG. 3) disposed in the space and including a positive electrode and a negative electrode. One of the conductive adhesive member or the conductive layer may include at least one positive electrode connecting portion (e.g., the positive electrode connecting portion 441 of FIG. 4C, and/or the first positive electrode connecting portion 441-1 and the second positive electrode connecting portion 441-2 of FIG. 14) electrically connected to the positive electrode of the battery, and the other of the conductive adhesive member or the conductive layer may include at least one negative electrode connecting portion (e.g., the negative electrode connecting portion 542 of FIG. 4D, the first negative electrode connecting portion 542-1 and the second negative electrode connecting portion 542-2 of FIG. 12A, and/or the negative electrode connecting portion 542-3 of FIG. 12E) electrically connected to the negative electrode or ground of the battery.

According to various embodiments, when power of the battery is supplied to the conductive adhesive member through the positive electrode connecting portion, the conductive adhesive member may be configured to be separated from the back cover.

In a first example, there is provided an electronic device (e.g. 200) comprising: a housing (e.g. 210) comprising a front cover (e.g. 202), a back cover (e.g. 211) facing an opposite direction to the front cover, and a lateral member (e.g. 218) surrounding a space between the front cover and the back cover, the lateral member comprising at least one conductive portion (e.g. 311, 312, 313, 314, 315, 316, 317) segmented by at least one non-conductive portion (e.g. 321, 322, 323, 324, 325, 326, 327), a first support member (e.g. 2181) extending from the lateral member into the space, a loop-shaped conductive adhesive member (e.g. 400, 400-1, 400-2, 400-3, 400-4, 400-5, 400-6) disposed between the first support member and the back cover, and a wireless communication circuit (e.g. 192) disposed in the space and configured to transmit and/or receive a wireless signal in at least one frequency band through the at least one conductive portion, wherein the conductive adhesive member comprises: a first adhesive portion (e.g. 421, 422, 423) spaced apart from the at least one non-conductive portion by a first distance (e.g. S1), and a second adhesive portion (e.g. 431, 432, 434) in contact with the at least one conductive portion or spaced apart from the at least one conductive portion by a second distance (e.g. S2) shorter than the first distance.

In a second example, there is provided the electronic device of the first example, wherein the first distance is 0.7 mm or more.

In a third example, there is provided the electronic device of the first example, wherein the lateral member comprises at least one feeding part (e.g. LA1, LA2, LA3) through which the at least one conductive portion is electrically connected to the wireless communication circuit, and wherein the conductive adhesive member comprises a third adhesive portion (e.g. 411, 412, 413) spaced apart from the at least one feeding part by a third distance (e.g. S3) longer than the second distance.

In a fourth example, there is provided the electronic device of the third example, wherein the third distance is 0.7 mm or more.

In a fifth example, there is provided the electronic device of the first example, further comprising: a conductive layer (e.g. 500, 500-1, 500-2, 500-3, 500-4, 500-5, 500-6, 500-7) at least partially disposed between the back cover and the conductive adhesive member.

In a sixth example, there is provided the electronic device of the fifth example, wherein the conductive adhesive member comprises: a substrate layer (e.g. 403, 403-1), a voltage supply layer (e.g. 402, 402-1) disposed on a first surface of the substrate layer, a first adhesive layer (e.g. 401) disposed on the voltage supply layer, and a second adhesive layer (e.g. 404, 404-1) disposed on a second surface of the substrate layer opposite to the first surface.

In a seventh example, there is provided the electronic device of the sixth example, wherein the conductive adhesive member is attached to the first support member through the second adhesive layer, and wherein the conductive layer is attached to the conductive adhesive member through the first adhesive layer so as to be attached to the first support member.

In an eighth example, there is provided the electronic device of the fifth example, further comprising: a battery (e.g. 250) disposed in the space and including an anode and a cathode, wherein one of the conductive adhesive member or the conductive layer comprises at least one anode connecting part (e.g. 441, 441-1, 441-2) electrically connected to the anode of the battery.

In a ninth example, there is provided the electronic device of the eighth example, wherein the other of the conductive adhesive member or the conductive layer comprises at least one cathode connecting part (e.g. 542, 542-1, 542-2, 542-3) electrically connected to the cathode of the battery or to a ground.

In a tenth example, there is provided the electronic device of the ninth example, wherein, when power of the battery is supplied to the conductive adhesive member through the anode connecting part, the conductive adhesive member is configured to be separated from the back cover.

In an eleventh example, there is provided the electronic device of the ninth example, further comprising: a printed circuit board (e.g. 240) disposed in the space and electrically connected to the battery, wherein the anode connecting part is electrically connected to the anode of the battery through the printed circuit board.

In a twelfth example, there is provided the electronic device of the eleventh example, wherein the printed circuit board comprises an electronic component configured to amplify power supplied to the conductive adhesive member from the battery.

In a thirteenth example, there is provided the electronic device of the ninth example, wherein, when viewed in a direction substantially perpendicular to the back cover, the anode connecting part and/or the cathode connecting part is disposed at a position not overlapped with the first adhesive portion.

In a fourteenth example, there is provided the electronic device of the ninth example, wherein the lateral member comprises at least one feeding part (e.g. LA1, LA2, LA3) through which the at least one conductive portion is electrically connected to the wireless communication circuit, wherein the conductive adhesive member comprises a third adhesive portion (e.g. 411, 412, 413) spaced apart from the at least one feeding part by a third distance (e.g. S3) longer than the second distance, and wherein, when viewed in a direction substantially perpendicular to the back cover, the anode connecting part and/or the cathode connecting part is disposed at a position not overlapped with the third adhesive portion.

In a fifteenth example, there is provided the electronic device of the first example, wherein the conductive adhesive member is configured to guide static electricity introduced into the space to the ground.

In a sixteenth example, there is provided an electronic device comprising: a housing (e.g. 210) comprising a front cover (e.g. 202), a back cover (e.g. 211) facing an opposite direction to the front cover, and a lateral member (e.g. 218) surrounding a space between the front cover and the back cover, the lateral member comprising at least one non-conductive portion (e.g. 321, 322, 323, 324, 325, 326, 327) and at least one conductive portion (e.g. 311, 312, 313, 314, 315, 316, 317), a first support member (e.g. 2181) extending from the lateral member into the space, a conductive adhesive member (e.g. 430a, 402-1) having at least a partially segmented shape and disposed between the first support member and the back cover, a non-conductive adhesive member (e.g. 430b, 401, 403, 404, 403-1, 404-1) disposed in a segmented adhesive portion of the conductive adhesive member between the first support member and the back cover, and a wireless communication circuit (e.g. 192) disposed in the space and configured to transmit and/or receive a wireless signal in at least one frequency band through the at least one conductive portion, wherein at least a portion of the conductive adhesive member is connected to the non-conductive adhesive member to form a loop shape, and wherein the conductive adhesive member comprises: a first adhesive portion (e.g. 421, 422, 423) spaced apart from the at least one non-conductive portion by a first distance (e.g. S1), and a second adhesive portion (e.g. 431, 432, 434) in contact with the at least one conductive portion or spaced apart from the at least one conductive portion by a second distance (e.g. S2) shorter than the first distance.

In a seventeenth example, there is provided the electronic device of the sixteenth example, wherein the lateral member comprises at least one feeding part (e.g. LA1, LA2, LA3) formed on the at least one conductive portion and configured to supply the wireless signal to the wireless communication circuit, and wherein the conductive adhesive member comprises a second adhesive portion (e.g. 411, 412, 413) spaced apart from the at least one feeding part by the second distance (e.g. S2).

In a eighteenth example, there is provided the electronic device of the seventeenth example, further comprising: a conductive layer (e.g. 500, 500-1, 500-2, 500-3, 500-4, 500-5, 500-6, 500-7) at least partially disposed between the back cover and the conductive adhesive member.

In a nineteenth example, there is provided the electronic device of the sixteenth example, further comprising: a battery (e.g. 250) disposed in the space and comprising a positive electrode and a negative electrode, wherein one of the conductive adhesive member or the conductive layer comprises at least one anode connecting part (e.g. 441, 441-1, 441-2) electrically connected to the anode of the battery, and wherein the other of the conductive adhesive member or the conductive layer comprises at least one cathode connecting part (e.g. 542, 542-1, 542-2, 542-3) electrically connected to the cathode of the battery or to a ground.

In a twentieth example, there is provided the electronic device of the nineteenth example, wherein, when power of the battery is supplied to the conductive adhesive member through the anode connecting part, the conductive adhesive member is configured to be separated from the back cover.

In a twenty-first example, there is provided an electronic device (e.g. 200) comprising: a housing (e.g. 210) comprising a front cover (e.g. 202), a back cover (e.g. 211) facing an opposite direction to the front cover, and a lateral member (e.g. 218) surrounding a space between the front cover and the back cover, the lateral member comprising at least one conductive portion (e.g. 311, 312, 313, 314, 315, 316, 317) segmented by at least one non-conductive portion (e.g. 321, 322, 323, 324, 325, 326, 327), a first support member (e.g. 2181) disposed between the front cover and back cover, a conductive adhesive member (e.g. 400, 400-1, 400-2, 400-3, 400-4, 400-5, 400-6) disposed between the first support member and the back cover to at least partially surround the space, and a wireless communication circuit (e.g. 192) disposed in the space and configured to transmit and/or receive a wireless signal in at least one frequency band through the at least one conductive portion, wherein the conductive adhesive member comprises: a first adhesive portion (e.g. 421, 422, 423) disposed to correspond to the at least one non-conductive portion and spaced apart from the at least one non-conductive portion by a first distance (e.g. S1), and a second adhesive portion (e.g. 431, 432, 434) in contact with the at least one conductive portion or disposed to correspond to the at least one conductive portion and spaced apart from the at least one conductive portion by a second distance (e.g. S2) shorter than the first distance.

In a twenty-second example, there is provided the electronic device of the twenty-first example, wherein the first distance is 0.7 mm or more.

In a twenty-third example, there is provided the electronic device of the twenty-first or twenty-second example, wherein the lateral member comprises at least one feeding part (e.g. LA1, LA2, LA3) through which the at least one conductive portion is electrically connected to the wireless communication circuit, and wherein the conductive adhesive member comprises a third adhesive portion (e.g. 411, 412, 413) disposed to correspond to the at least one feeding part and spaced apart from the at least one feeding part by a third distance (e.g. S3) longer than the second distance.

In a twenty-fourth example, there is provided the electronic device of the twenty-third example, wherein the third distance is 0.7 mm or more.

In a twenty-fifth example, there is provided the electronic device of any of the twenty-first to twenty-fourth examples, further comprising: a conductive layer (e.g. 500, 500-1, 500-2, 500-3, 500-4, 500-5, 500-6, 500-7) at least partially disposed between the back cover and the conductive adhesive member.

In a twenty-sixth example, there is provided the electronic device of the twenty-fifth example, wherein the conductive adhesive member comprises: a substrate layer (e.g. 403, 403-1), a voltage supply layer (e.g. 402, 402-1) disposed on a first surface of the substrate layer, a first adhesive layer (e.g. 401) disposed on the voltage supply layer, and a second adhesive layer (e.g. 404, 404-1) disposed on a second surface of the substrate layer opposite to the first surface, wherein the conductive adhesive member is attached to the first support member through the second adhesive layer, and wherein the conductive layer is attached to the conductive adhesive member through the first adhesive layer so as to be attached to the first support member.

In a twenty-seventh example, there is provided the electronic device of the twenty-sixth example, further comprising: a battery (e.g. 250) disposed in the space and including an anode and a cathode, wherein one of the conductive adhesive member or the conductive layer comprises at least one anode connecting part (e.g. 441, 441-1, 441-2) electrically connected to the anode of the battery.

In a twenty-eighth example, there is provided the electronic device of the twenty-seventh example, wherein the other of the conductive adhesive member or the conductive layer comprises at least one cathode connecting part (e.g. 542, 542-1, 542-2, 542-3) electrically connected to the cathode of the battery or to a ground.

In a twenty-ninth example, there is provided the electronic device of the twenty-eighth example, wherein the conductive adhesive member is configured to be separated from the back cover in response to power of the battery being supplied to the conductive adhesive member through the anode connecting part.

In a thirtieth example, there is provided the electronic device of the twenty-ninth example, further comprising: a printed circuit board (e.g. 240) disposed in the space and electrically connected to the battery, wherein the anode connecting part is electrically connected to the anode of the battery through the printed circuit board.

In a thirty-first example, there is provided the electronic device of the thirtieth example, wherein the printed circuit board comprises an electronic component configured to amplify power supplied to the conductive adhesive member from the battery.

In a thirty-second example, there is provided the electronic device of any of the twenty-eighth to thirty-first examples, wherein, when viewed in a direction substantially perpendicular to the back cover, the anode connecting part and/or the cathode connecting part is disposed at a position not overlapped with the first adhesive portion.

In a thirty-third example, there is provided the electronic device of any of the twenty-eighth to thirty-second examples, wherein the lateral member comprises at least one feeding part (e.g. LA1, LA2, LA3) through which the at least one conductive portion is electrically connected to the wireless communication circuit, wherein the conductive adhesive member comprises a third adhesive portion (e.g. 411, 412, 413) spaced apart from the at least one feeding part by a third distance (e.g. S3) longer than the second distance, and wherein, when viewed in a direction substantially perpendicular to the back cover, the anode connecting part and/or the cathode connecting part is disposed at a position not overlapped with the third adhesive portion.

In a thirty-fourth example, there is provided the electronic device of any of the twenty-first to thirty-third examples, wherein the conductive adhesive member is configured to guide static electricity introduced into the space to the ground.

In a thirty-fifth example, there is provided the electronic device of any of the twenty-first to thirty-fourth examples, wherein the conductive adhesive member (e.g. 430a, 402-1) has an at least partially segmented shape, wherein the electronic device further comprises a non-conductive adhesive member (e.g. 430b, 401, 403, 404, 403-1, 404-1) disposed in a segmented adhesive portion of the conductive adhesive member, and wherein at least a portion of the conductive adhesive member is connected to the non-conductive adhesive member to form a shape at least partially surrounding the space.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. Therefore, the scope of various embodiments of the disclosure should be construed to include, in addition to the embodiments set forth herein, all changes and modifications derived based on the technical idea of various embodiments of the disclosure.

## Claims

1. An electronic device (200) comprising:
a housing (210) comprising a front cover (202), a back cover (211) facing an opposite direction to the front cover, and a lateral member (218) surrounding a space between the front cover and the back cover, the lateral member comprising at least one non-conductive portion (321, 322, 323, 324, 325, 326, 327) and at least one conductive portion (311, 312, 313, 314, 315, 316, 317);
a first support member (2181) disposed between the front cover and back cover;
a conductive adhesive member (400, 400-1, 400-2, 400-3, 400-4, 400-5, 400-6) disposed between the first support member and the back cover to at least partially surround the space; and
a wireless communication circuit (192) disposed in the space and configured to transmit and/or receive a wireless signal in at least one frequency band through the at least one conductive portion,
wherein the conductive adhesive member comprises:
a first adhesive portion (421, 422, 423) disposed to correspond to the at least one non-conductive portion and spaced apart from the at least one non-conductive portion by a first distance (S1), and
a second adhesive portion (431, 432, 434) in contact with the at least one conductive portion or disposed to correspond to the at least one conductive portion and spaced apart from the at least one conductive portion by a second distance (S2) shorter than the first distance.

2. The electronic device of claim 1, wherein the first distance is 0.7 mm or more.

3. The electronic device of claim 1 or 2, wherein the lateral member comprises at least one feeding part (LA1, LA2, LA3) through which the at least one conductive portion is electrically connected to the wireless communication circuit, and
wherein the conductive adhesive member comprises a third adhesive portion (411, 412, 413) disposed to correspond to the at least one feeding part and spaced apart from the at least one feeding part by a third distance (S3) longer than the second distance.

4. The electronic device of claim 3, wherein the third distance is 0.7 mm or more.

5. The electronic device of any of claims 1 to 4, further comprising:
a conductive layer (500, 500-1, 500-2, 500-3, 500-4, 500-5, 500-6, 500-7) at least partially disposed between the back cover and the conductive adhesive member.

6. The electronic device of claim 5, wherein the conductive adhesive member comprises:
a substrate layer (403, 403-1);
a voltage supply layer (402, 402-1) disposed on a first surface of the substrate layer;
a first adhesive layer (401) disposed on the voltage supply layer; and
a second adhesive layer (404, 404-1) disposed on a second surface of the substrate layer opposite to the first surface;
wherein the conductive adhesive member is attached to the first support member through the second adhesive layer, and
wherein the conductive layer is attached to the conductive adhesive member through the first adhesive layer so as to be attached to the first support member.

7. The electronic device of claim 5, further comprising:
a battery (250) disposed in the space and including an anode and a cathode,
wherein one of the conductive adhesive member or the conductive layer comprises at least one anode connecting part (441, 441-1, 441-2) electrically connected to the anode of the battery.

8. The electronic device of claim 7, wherein the other of the conductive adhesive member or the conductive layer comprises at least one cathode connecting part (542, 542-1, 542-2, 542-3) electrically connected to the cathode of the battery or to a ground.

9. The electronic device of claim 8, wherein the conductive adhesive member is configured to be separated from the back cover in response to power of the battery being supplied to the conductive adhesive member through the anode connecting part.

10. The electronic device of claim 9, further comprising:
a printed circuit board (240) disposed in the space and electrically connected to the battery,
wherein the anode connecting part is electrically connected to the anode of the battery through the printed circuit board.

11. The electronic device of claim 10, wherein the printed circuit board comprises an electronic component configured to amplify power supplied to the conductive adhesive member from the battery.

12. The electronic device of any of claims 8 to 11, wherein, when viewed in a direction substantially perpendicular to the back cover, the anode connecting part and/or the cathode connecting part is disposed at a position not overlapped with the first adhesive portion.

13. The electronic device of any of claims 8 to 12, wherein the lateral member comprises at least one feeding part (LA1, LA2, LA3) through which the at least one conductive portion is electrically connected to the wireless communication circuit,
wherein the conductive adhesive member comprises a third adhesive portion (411, 412, 413) spaced apart from the at least one feeding part by a third distance (S3) longer than the second distance, and
wherein, when viewed in a direction substantially perpendicular to the back cover, the anode connecting part and/or the cathode connecting part is disposed at a position not overlapped with the third adhesive portion.

14. The electronic device of any of claims 1 to 13, wherein the conductive adhesive member is configured to guide static electricity introduced into the space to the ground.

15. The electronic device of any of claims 1 to 14, wherein the conductive adhesive member (430a, 402-1) has an at least partially segmented shape;
wherein the electronic device further comprises a non-conductive adhesive member (430b, 401, 403, 404, 403-1, 404-1) disposed in a segmented adhesive portion of the conductive adhesive member; and
wherein at least a portion of the conductive adhesive member is connected to the non-conductive adhesive member to form a shape at least partially surrounding the space.
